(19) Europäisches Patentamt
European Patent Office
Office européen des brevets

(11) **EP 3 720 900 B1**

(12) **EUROPÄISCHE PATENTSCHRIFT**

(45) Veröffentlichungstag und Bekanntmachung des Hinweises auf die Patenterteilung:
**22.01.2025  Patentblatt 2025/04**

(21) Anmeldenummer: **18792892.4**

(22) Anmeldetag: **17.10.2018**

(51) Internationale Patentklassifikation (IPC):
**C08J 5/00** (2006.01)     **C08J 7/04** (2020.01)

(52) Gemeinsame Patentklassifikation (CPC):
(C-Sets verfügbar)
**C09D 177/06; B05D 1/04; B05D 3/005; B05D 7/02;
C08J 7/0427; C08J 7/043; C08J 7/044;
C08J 7/048; C08K 7/14; C08L 77/06; C09D 5/03;
C09D 5/4461; C09D 7/61; C09D 177/02;**
B05D 1/06;                                    (Forts.)

(86) Internationale Anmeldenummer:
**PCT/EP2018/078369**

(87) Internationale Veröffentlichungsnummer:
**WO 2019/110181 (13.06.2019 Gazette 2019/24)**

(54) **POLYMER-BASIERENDES SUBSTRAT SOWIE VERFAHREN ZU DESSEN HERSTELLUNG**

POLYMER-BASED SUBSTRATE AND METHOD FOR THE PRODUCTION THEREOF

SUBSTRAT À BASE DE POLYMÈRE, AINSI QUE PROCÉDÉ POUR LA FABRICATION DE CE DERNIER

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität:  **08.12.2017  DE 102017129353**

(43) Veröffentlichungstag der Anmeldung:
**14.10.2020  Patentblatt 2020/42**

(73) Patentinhaber: **Ensinger GmbH
71154 Nufringen (DE)**

(72) Erfinder: **MÖLLER, Michael
93413 Cham (DE)**

(74) Vertreter: **Hoeger, Stellrecht & Partner
Patentanwälte mbB
Uhlandstrasse 14c
70182 Stuttgart (DE)**

(56) Entgegenhaltungen:
**EP-A1- 0 667 625        WO-A1-2005/097902
US-A1- 2016 121 361**

(52) Gemeinsame Patentklassifikation (CPC): (Forts.)
B05D 5/06; C08J 2371/12; C08J 2377/06;
C08J 2471/12; C08J 2477/02; C08J 2477/06;
C08K 3/04; C08K 3/042; C08K 3/08; C08K 3/34;
C08K 7/06; C08K 2003/2296; C08K 2201/001;
Y02P 20/582

C-Sets
**C08K 3/04, C08L 77/02;**
**C08K 7/14, C08L 77/06;**
**C08L 77/06, C08K 7/14, C08L 71/12;**
**C09D 177/02, C08K 3/04**

## Beschreibung

Die Erfindung betrifft ein Polymer-basierendes Substrat, welches insbesondere elektrostatisch beschichtbar ist, sowie ein Verfahren zu dessen Herstellung.

Die elektrostatische Beschichtung, insbesondere das Pulverlackieren von Substraten, ist in vielen Anwendungsbereichen von großer Bedeutung, nicht nur zu dekorativen Zwecken, sondern insbesondere auch als Korrosionsschutz.

Substrate gelten als gut pulverlackierbar, wenn z.B. folgende Punkte zutreffen:

a) eine gute Pulveranziehung und eine homogene Pulverabdeckung beim Aufsprühen des elektrostatisch aufgeladenen Lackpulvers auf das geerdete oder elektrisch geladene Substrat;
b) ein fehlerfreies Fixieren, z.B. durch Einbrennen, Aufschmelzen, Sintern, thermisches Härten des Lackes - vor allem ohne Blasenbildung oder Lochbildung innerhalb der Lackschicht oder zwischen Substrat und Lackschicht;
c) eine feste Anhaftung der Lackschicht an das Substrat, um ein Delaminieren, Abblättern oder Abbröseln der Lackschicht zu verhindern.

Aus der US-Patentanmeldung US 2016/0121361 A1 ist ein Verfahren zur Beschichtung einer Oberfläche eines elektrisch nicht leitfähigen Substrats mittel Pulver-Lackierung bekannt. Das unbeschichtete Substrat wird zur Absenkung des Oberflächenwiderstands auf eine Temperatur im Bereich von 40 °C bis 140 °C erhitzt um den Oberflächenwiderstand des unbeschichteten Substrats auf einen Wert im Bereich von $10^{10}\,\Omega$ bis weniger als $10^{12}\,\Omega$ abzusenken. Danach wird die Beschichtung in einer einzelnen Schicht mittel Pulverlackierung auf das Substrat aufgebracht und bei einer Temperatur von 170 °C oder weniger ausgehärtet.

In der Internationalen Patentanmeldung WO 2005/097902 A1 wird ein Verfahren zur elektrostatischen Beschichtung von Substraten beschrieben, wobei die Substrate aus elektrisch leitfähigen Polyamid-Zusammensetzungen hergestellt sind. Die Zusammensetzungen enthalten ein Polyamid, ein Novolac-Harz, ein Härtemittel und einen elektrisch leitfähigen Füllstoff.

In der WO 97/34709 A1 wird ein Verfahren zur elektrostatischen Beschichtung von Substraten, insbesondere aus dem Automobil-Bereich, vorgeschlagen, bei dem das Substrat aus einer Zusammensetzung hergestellt wird, welche eine Mischung eines Duroplasten, eines Füllstoffs und/oder eines Verstärkungsstoffs mit einem Anteil von mindestens 30 Gew.-% sowie weniger als 3 Gew.-% Ruß mit einer primären Partikelgröße von weniger als 125 nm umfasst, wobei das Substrat eine Leitfähigkeit von mindestens $10^{-14}$ S/cm aufweist.

Pulverlackierbare Substrate in Form von Wärmedämmprofilen bzw. Isolierstegen für Metall-Kunststoff-Verbundprofile sind aus der EP 0 638 368 A1 bekannt. Hierbei wird die im verbauten Zustand der Isolierprofile außen liegende Oberfläche mit einer elektrisch leitenden Beschichtung versehen, die jedoch zu den Metallprofilen im Verbund jeweils einen Abstand einhält, um die thermische Isolierung der Metallprofile möglichst nicht zu beeinträchtigen.

Zum Aufbringen der elektrisch leitenden Beschichtung empfiehlt die EP 0 638 368 A1 neben dem Flammspritzen, dem elektrodenlosen Plasmaspritzen, dem Lichtbogenspritzen, dem Niederdruckspritzen auch das Aufbringen mittels Ionenstrahl, ein galvanisches Aufbringen und schließlich auch das Koextrudieren der elektrisch leitenden Beschichtung auf den wärmeisolierenden Steg. Zudem wird beschrieben, dass auch das Material des Isolierstegs durch Einlagerung von Leitruß, Metallpulvern oder Metallfasern elektrisch leitfähig gemacht werden kann und so eine verbesserte Haftung der Pulverlackierung erzielt wird.

Gemäß der EP 0 638 368 A1 kann die elektrisch leitende Beschichtung als geschlossene Beschichtung oder auch als punktförmiger Auftrag auf die mit der Pulverlackschicht zu bedeckende Oberfläche des Isolierstegs aufgebracht werden.

Mit einem Pulverlack elektrostatisch beschichtete Polyamid-Werkstoffe werden in der EP 0 667 625 B1 beschrieben. Der Polyamid-Werkstoff enthält dabei neben dem Polyamid bis zu 10 Gew.-% Kohlefasern sowie 30 bis 60 Gew.-% eines metallischen Pulvers, wobei das Gewichtsverhältnis des metallischen Pulvers zu den Kohlefasern 150:1 bis 6:1 betragen soll. Damit werden KunststoffBauteile erhalten, die sich auch zusammen mit Metallteilen pulverlackieren lassen.

In der EP 0 685 527 B1 wird ein spezieller Polyphenylenether-Polyamidbasierender Polymerwerkstoff mit 1 bis 7 Gew.-Teilen an Leitruß pro 100 Gew.-Teile Polymer empfohlen, so dass zum einen eine Izod-Kerbschlagzähigkeit von mehr als 15 kJ/m$^2$ und ein Volumen-Widerstandswert von weniger als $10^6$ Ohm·cm erzielbar wird. Der Polymerwerkstoff ist für Anwendungen konzipiert, bei denen ein elektrostatischer Beschichtungsprozess zur Anwendung kommt.

In der EP 1 223 188 B1 wird empfohlen, auf der mit einer Pulverlackschicht zu versehenden Oberfläche eines Isolierstegs eine elektrisch leitfähige Primerschicht aufzubringen, welche mindestens einen Anteil von 45 Gew.-% eines Acrylharzes und gegebenenfalls einen Anteil eines Phosphorsäure-modifizierten Polymers enthält.

Die EP 2 071 585 A1 schlägt eine thermoplastische Zusammensetzung mit einer auf Polyamid basierenden kontinuierlichen Phase vor, in der ein Polyphenylenether dispergiert vorliegt. Die Zusammensetzung enthält ferner ein Leitfähigkeits-Additiv, das zu mindestens 50 % in der kontinuierlichen Phase enthalten ist. Der Volumen-Widerstand

beträgt weniger als $10^5$ Ohm·cm. Als Anwendungsgebiet für den Werkstoff wird der Automobilbau genannt, in dem häufig metallische und Kunststoff-basierende Bauteile gemeinsam einer Pulverlackierung unterworfen werden.

Ein weiteres auf den Automobilbau abgestimmtes Verfahren zur Beschichtung von Substraten ist aus der WO 2005/097902 A1 bekannt. Für die Herstellung der Substrate wird eine elektrisch leitfähige Polyamid-Zusammensetzung vorgeschlagen, welche neben dem Polyamid als Hauptbestandteil einen Anteil eines Novolac-Harzes, einen Anteil eines Verstärkungsstoffes sowie mindestens 0,1 Gew.-% eines elektrisch leitfähigen partikulären Füllstoffs enthält.

Elektrisch leitfähige Polyamid-Formmassen mit verminderter Wasseraufnahmefähigkeit werden in der EP 2 427 518 B1 beschrieben. Die Formmassen enthalten neben dem Polyamid ein Polymerisat des Propylens, einen Verträglichkeitsvermittler in Form von Pfropfcopolymeren des Polypropylens sowie einen Anteil von Carbon-Nanotubes (CNT).

Problematisch bei den Verfahren im Stand der Technik sind eine immer wieder beobachtete unzureichende Pulverlackabdeckung, eine unzureichende Lackhaftung und/oder Blasenbildung der Lackschicht nach der Pulverbeschichtung im Bereich der Kunststoffbauteile, z.B. der Isolierstege von Verbundprofilen.

Insbesondere bei zu lackierenden Substraten, die auf der Basis von Polyamidwerkstoffen hergestellt sind, ergeben sich oftmals sehr enge, schwer oder nicht kontrollierbare Bereiche für Prozessparameter, welche zur Vermeidung von beispielsweise einer Blasenbildung (Restfeuchtigkeit des Substrats zu hoch) und unzureichender Pulverlackabdeckung oder anderen Lackfehlern, wie z.B. Lackdickenschwankungen (generell unzureichende elektrostatische Eigenschaften des Substrats und/oder Restfeuchtigkeit des Substrats zu gering) einzuhalten sind.

Bei vielen bekannten Verfahren im Stand der Technik wird der Polymerwerkstoff im Volumen z.B. durch Zugabe elektrisch leitfähiger Füllstoffe modifiziert, so dass eine verbessere (Ab-)Leitfähigkeit im Volumen erzielt wird. Diese Füllstoffe können dadurch bestimmte physikalische Eigenschaften, wie beispielsweise die mechanische Festigkeit oder Wärmeleitfähigkeit, aber auch z.B. die Werkstoffkosten, negativ beeinflussen.

Der vorliegenden Erfindung liegt deshalb die Aufgabe zugrunde, Substrate bereitzustellen, bei denen die elektrostatische Pulverlackierbarkeit reproduzierbar und prozessstabil verbessert ist, ohne dass deren grundsätzliche Werkstoff- oder Produkteigenschaften, wie z.B. die Wärmedämmeigenschaften, nennenswert (nachteilig) vermindert werden.

Diese Aufgabe wird bei einem Polymer-basierenden Substrat mit den Merkmalen des Anspruchs 1 gelöst.

Erfindungsgemäß wird auf einem Oberflächenbereich eines unter Verwendung eines Polymermaterials gefertigten Substratgrundkörpers, der im Wesentlichen elektrisch nicht leitfähig ist, eine Beschichtung aufgebracht, wobei die Beschichtung ein Matrixpolymer und ein in dem Matrixpolymer dispergiertes, den Oberflächenwiderstand der Beschichtung verminderndes Additiv mit einem Anteil umfasst, der so gewählt ist, dass der spezifische Oberflächenwiderstand der Beschichtung ca. $10^{10}$ Ohm oder weniger beträgt. Das Polymermaterial des Substratgrundkörpers umfasst dabei ein erstes Polymer welches mit dem Matrixpolymer der Beschichtung kompatibel ist.

Die erfindungsgemäßen Substrate liefern insbesondere bei der elektrostatischen Pulverlackierung reproduzierbare Ergebnisse und zeigen sich prozessstabil, insbesondere auch bei Substraten mit geringen Feuchtigkeitsgehalten.

Überraschenderweise wurde auch gefunden, dass durch das erfindungsgemäße Verfahren zur Beschichtung der Substrate, die mechanischen Eigenschaften der Substrate kaum verändert werden, was für Produkte, wie z.B. Isolierstege oder Anbauteile im KFZ-Bereich, einen wesentlichen Vorteil darstellt. Dies ist insbesondere auch deshalb überraschend, da das erfindungsgemäße Verfahren die Verwendung von Lösemitteln beinhaltet, welche unter Umständen das Substrat anzulösen vermögen.

In vielen Anwendungen - speziell im Anwendungsfall der Wärmedämmprofile - werden die erfindungsgemäßen Substrate in Verbindung mit mindestens einem Metallprofil verwendet, danach in der Regel elektrostatisch gepulvert bzw. einer Pulverlackierung unterworfen.

Hierbei ist es vorteilhaft, wenn auf das Substrat, das mit mindestens einem Metallprofil, beispielsweise einem Aluminiumprofil, verbunden wird, die Beschichtung auf den Substratgrundkörper so aufgebracht wird, dass nach dem Verbinden des Substrats mit dem Metallprofil die Beschichtung mit reduziertem Oberflächenwiderstand einen elektrisch leitenden Kontakt mit dem Metallprofil aufweist. Hier kann dann eine gute Pulveranziehung und damit eine gute Lackabdeckungsquote bei der Pulverbeschichtung, vornehmlich über einen sogenannten geerdeten Mechanismus, erzielt werden.

Nach einer anderen Variante kann auch ohne einen direkten elektrisch leitenden Kontakt der Beschichtung mit reduziertem Oberflächenwiderstand zu dem Metallprofil eine gute Pulveranziehung über einen sogenannten kapazitiven Mechanismus erzielt werden. Hier ist es möglich, dass die Beschichtung auf dem Substratgrundkörper so aufgebracht wird, dass anschließend die Beschichtung ohne jeglichen Kontakt mit dem Metallprofil bleibt.

Beim geerdeten Mechanismus im Sinne der vorliegenden Erfindung wird eine über elektrostatisch geladene Pulverpartikel aufgebrachte Ladung mittels einer geerdeten elektrischen Leitung vom Substrat abgeführt. Somit wird verhindert, dass sich während des Pulverauftrags repulsive elektrostatische Kräfte ausbilden bzw. aufbauen, die einem vollflächigen, homogenen Pulverauftrag entgegenwirken.

Beim kapazitiven Mechanismus wird im Sinne der vorliegenden Erfindung unter anderem eine lokale Kapazität am Substrat zur Aufnahme elektrischer Ladung bereitgestellt; diese elektrische Ladung wird vorerst nicht abgeführt, sondern nur über größere Bereiche verteilt, wodurch die wirkenden elektrischen Feldkräfte (insbesondere repulsive Kräfte zwischen mit gleichen Vorzeichen geladenen Pulverpartikeln) verringert werden.

Bevorzugt beträgt der spezifische Oberflächenwiderstand einer erfindungsgemäßen Beschichtung ca. $10^9$ Ohm oder weniger, insbesondere $10^8$ Ohm oder weniger.

Zum Vergleich: der spezifische Oberflächenwiderstand von trockenem Polyamid PA66 ohne Zusatz von leitfähigen Additiven beträgt ca. $10^{12}$ Ohm bis ca. $10^{13}$ Ohm.

Der spezifische Oberflächenwiderstand der Beschichtung wird in einem trockenen Zustand gemessen ("ungünstigster Zustand" bei PA 66 $\leq$ 0,3 % Feuchtegehalt), oder nach einer Einlagerung bei 23 °C +/- 2°C und bei 50 % +/-10 % relativer Luftfeuchte sowie entsprechend den Vorgaben der DIN EN 61340-2-3.

Alternativ kann eine Messung nach einem Schnellverfahren durchgeführt werden, bei dem ein Oberflächenwiderstand mit Elektroden mit punktförmigen Messspitzen bestimmt wird, welches allerdings auf einen Messbereich bis ca. $10^8$ Ohm beschränkt ist. Handelsübliche digitale Multimeter, die bei dem Schnellverfahren eingesetzt werden können, haben je nach Ausführung typischerweise einen Messbereich des elektrischen Widerstands in der Größenordnung bis ca. $10^7$ Ohm, eventuell bis ca. $10^8$ Ohm. Die Elektroden werden dabei z.B. im Abstand von 1 cm auf der zu messenden Oberfläche positioniert.

Da die Messung des Oberflächenwiderstands nach obigem Schnellverfahren typischerweise einen höheren Wert ergibt als die Messung des spezifischen Oberflächenwiderstands nach dem oben beschriebenen Normprüfverfahren, bei dem die Messung an einer quadratischen Fläche erfolgt, wobei die Elektroden an zwei gegenüberliegenden Seiten des Quadrats angeordnet werden, lässt das Schnellverfahren in jedem Fall eine Beurteilung zu, ob bei einer Probe der spezifische Oberflächenwiderstand unterhalb einer Obergrenze von beispielsweise $10^{10}$ Ohm, insbesondere auch unterhalb von $10^9$ Ohm oder unterhalb von $10^8$ Ohm, liegt oder nicht.

Wird nach diesem Schnellverfahren ein Messwert für den Oberflächenwiderstand von z.B. $10^8$ Ohm oder weniger erhalten, kann man eine Aussage zum spezifischen Oberflächenwiderstand treffen, der in einem solchen Fall erheblich weniger als $10^9$ Ohm beträgt. Wird aufgrund der Überschreitung des Messbereichs des Multimeters kein Wert angezeigt, lässt dies andererseits nicht den Schluss zu, dass der spezifische Oberflächenwiderstand oberhalb von $10^9$ Ohm liegt; dies muss in einem solchen Fall dann mit einem Gerät mit größerem Messbereich erneut geprüft werden.

Die Messung des spezifischen Oberflächenwiderstandes kann präzise nach dem oben beschriebenen Normprüfverfahren durchgeführt werden, es kann jedoch in Einzelfällen bei einer komplexen, kleinteiligen Oberflächengeometrie einer zu prüfenden Probe zu Problemen bei der Umsetzung des Normprüfverfahrens kommen. Hier kann dann ebenfalls ersatzweise die Messung des Oberflächenwiderstands im Schnellverfahren - wie oben ausgeführt - erfolgen. Bei bereits (pulver-)lackierten Mustern kann eine präparative Freilegung der Beschichtung mit reduziertem Oberflächenwiderstand durchgeführt werden, um dann eine Messung des Oberflächenwiderstandes durchzuführen.

Darüber hinaus kann natürlich auf einen ausreichend dimensionierten planen Probekörper, der aus dem Polymermaterial des Substratgrundkörpers gefertigt ist, die erfindungsgemäß zu verwendende Beschichtung aufgebracht werden und danach der spezifische Oberflächenwiderstand nach dem Normverfahren bestimmt werden.

Erfindungsgemäß umfasst das Polymermaterial des Substratgrundkörpers ein erstes Polymer und die Beschichtung ein Matrixpolymer, welch letzteres so ausgewählt wird, dass es mit dem ersten Polymer kompatibel ist.

Kompatibel in Sinne der vorliegenden Erfindung sind zwei Polymere, wenn sich die Polymere molekular oder mikroskopisch mischen können (z.B. durch Interdiffusion). Auf molekularer Ebene bedeutet dies, dass sich die Polymerketten der Polymere vermischen lassen, verschlaufen und/oder durchdringen und dadurch in einem Bereich (z.B. in einem Volumenbereich einer Grenzfläche oder in einer Diffusionszone) bevorzugt eine einphasige Polymermischung entsteht. Eine solche Polymermischung kann dann z.B. homogene Eigenschaften aufweisen, die zwischen den Eigenschaften der einzelnen polymeren Bestandteile liegen. Dies kann z.B. ein homogener neuer Schmelzpunkt bei teilkristallinen Polymeren oder ein homogener Glasübergangspunkt sein, z.B. bei verträglichen Mischungen von PA6 und PA66. Die Bestimmung dieser Kenngrößen ist z.B. beschrieben in Ehrenstein, Trawiel, Riedel: Praxis der Thermischen Analyse von Kunststoffen, 1998, Carl Hanser Verlag München, ISBN 3-446-21001-6, Kapitel 1.2.3.7.

Eine mikroskopische Mischung liegt vor, wenn die beiden Polymere eine Tendenz aufweisen, sich aufgrund von Unverträglichkeiten zu entmischen (phasensegregierte Polymere), jedoch ein solches Zwei-Phasen-System eine große Grenzfläche aufweist und in einem Zwischenbereich z.B. co-kontinuierliche Strukturen oder gyroidale Strukturen oder andere polymere Misch-Phasen als Strukturen ausbildet. Diese Strukturen werden makroskopisch als Mischung wahrgenommen, während man mikroskopisch Entmischung feststellen kann, z.B. unter Anwendung von elektronenmikroskopischen Abbildungsverfahren oder z.B. durch Röntgenbeugungsexperimente. Mikroskopisch mischbar im Sinne der vorliegenden Erfindung sind Polymere, bei denen in einer Abmischung miteinander bestenfalls Inselstrukturen oder Domänen mit einem mittleren Durchmesser bzw. einer Domänengröße von ca. 5 μm oder weniger verbleiben. Der mittlere Durchmesser bzw. die mittlere Domänengröße lässt sich durch einfaches händisches Ausmessen anhand der elektronenmikroskopischen Aufnahmen ermitteln.

Bei co-kontinuierlichen Phasen sorgen mikroskopische Hinterschnitte z.B. für einen formschlüssigen Zusammenhalt der beiden Phasen. Makroskopisch lassen sich hierbei aber keine gemeinsamen Eigenschaften wie ein gemeinsamer Schmelzpunkt oder eine gemeinsame Glasübergangstemperatur feststellen.

Durch die Ausbildung einer Mischung, also einer homogenen molekularen oder einer mikroskopischen Mischung des ersten Polymers und des Matrixpolymers von erfindungsgemäßen Substraten, wird in einer definierten Übergangsphase ein gradueller Übergang des Werkstoffes (erstes Polymer) des Substratgrundkörpers zum Werkstoff (Matrixpolymer) der Beschichtung erzeugt. Kräfte werden dabei physikalisch aber auch durch chemische Wechselwirkungen und Bindungen übertragen. Somit ist die Anhaftung der Beschichtung an den Substratgrundkörper hervorragend und ein unerwünschtes Ablösen der Beschichtung wird vermieden. Die oben genannte Ausbildung der Mischung des ersten Polymers und des Matrixpolymers wird wesentlich durch die Wahl eines geeigneten Lösemittels der Beschichtungszusammensetzung beeinflusst.

Bei einem üblichen Aufbringen von nicht mischbaren Beschichtungswerkstoffen auf ein Substrat findet man einen einstufigen Übergang der Werkstoffe; die Anhaftung in der Grenzfläche wird dann hauptsächlich durch die chemischen Bin-dungen und Wechselwirkungen gewährleistet.

Die erfindungsgemäßen Substrate sind gut elektrostatisch pulverlackierbar. Insbesondere kann die Pulverlackierung vorgenommen werden, ohne dass die zu lackierenden Oberflächenbereiche der erfindungsgemäßen Substrate, beispiels-weise durch Plasma- oder Corona-Behandlung oder Aufrauen, vorbehandelt werden müssten. Dadurch ist eine besonders wirtschaftliche Verarbeitung der erfindungsgemäßen Substrate möglich. Darüber hinaus sind die erfindungsgemäßen Substrate auch für den Einsatz als thermische Isolierprofile geeignet.

Natürlich lassen sich erfindungsgemäße Substrate trotzdem mit vorgenannten Verfahren der Oberflächenbehandlung weiter bearbeiten, um Oberflächeneigenschaften zu verändern, zu verbessern oder für einen bestimmten Anwendungszweck anzupassen.

Des Weiteren lassen sich die erfindungsgemäßen Substrate auch bei einer komplexen geometrischen Struktur der zu lackierenden Oberflächenbereiche, insbesondere auch bei hinterschnittener Formgebung, dreidimensionalen Formkörpern (z.B. Anbauteilen für Fahrzeuge oder Maschinen), aber auch komplizierten Profilgeometrien, wie z.B. Hohlprofilen, zufriedenstellend pulverlackieren. Als Substratgrundkörper kommen insbesondere auch Isolierstege und Wärmedämmprofile in Frage, wie sie z.B. aus den Lieferprogrammen der Marke insulbar® der Fa. Ensinger GmbH oder aus der WO 01/48346 A1 bekannt sind. Wärmedämmprofile können selbst auch als tragende Rahmenprofile oder Rahmenschalen in Fenster-, Tür-, Dach-, und Fassadenanwendungen dienen.

Erfindungsgemäße Substrate lassen sich mit einer hohen Lackabdeckung elektrostatisch Lackieren, insbesondere pulverlackieren. Die Quote der Lackabdeckung liegt dabei bei ca. 90 % oder mehr, bevorzugt ca. 95 % oder mehr, besonders bevorzugt ca. 98 % oder mehr. Im Idealfall wird eine Quote von 100 % Lackabdeckung in dem zur Lackierung vorbereiteten Bereich erzielt.

Die Lackabdeckung lässt sich quantifizieren, indem man innerhalb einer repräsentativen Bezugsfläche einer lackierten Oberfläche die Flächenanteile ohne Lackauftrag - sofern vorhanden - ermittelt. Zur Auswertung eignen sich insbesondere maßstabsgetreue, nicht verzerrte Fotografien oder lichtmikroskopische Aufnahmen bei einer 50-fachen Vergrößerung. Eine repräsentative Bezugsfläche in Form eines rechteckigen Ausschnitts der Oberfläche weist z.B. 25 mm Länge in Längs- und Querrichtung auf und liegt bevorzugt im direkten Sichtbereich. Danach ermittelt man innerhalb dieser Bezugsfläche die Flächenanteile, welche nicht von Lack bedeckt sind (= lackfreie Fläche). Dies kann durch händisches Ausmessen oder softwaregestützte Ermittlung des Flächenintegrals erfolgen. Gegebenenfalls kann diese Analyse an verschiedenen Orten wiederholt werden. Die Quote der Lackabdeckung errechnet sich dann wie folgt:

$$Lackabdeckung\ in\ \% = 100\ \% \times \left(1 - \frac{lackfreie\ Fläche}{gesamte\ Bezugsfläche}\right)$$

Neben der homogenen Lackabdeckung ist auch ein fehlerfreies Fixieren, z.B. einer Pulver-Lackschicht, durch das Einbrennverfahren für Pulverlacke erforderlich. Dafür sind in der Regel Temperaturen von 170 °C oder mehr, bevorzugt 180 °C oder mehr, oder auch Temperaturen von über 200 °C erforderlich.

Beim Einbrennen des Pulverlackes werden die Substrate für mehrere Minuten, z.B. 10 Minuten oder länger, insbesondere 20 Minuten oder länger, auf einer hohen Temperatur gehalten, um die Filmbildung und Vernetzung des Pulverlackes zu vervollständigen. Ebenso können Trocknungsschritte Teil des Lackierverfahrens sein, bei denen das Substrat häufig vorab bei moderaten Temperaturen von 80 °C bis 150 °C vorgetrocknet wird. Trocknungsschritte werden bevorzugt eingesetzt, um z.B. ein Ausgasen von flüchtigen Stoffen und insbesondere das Freisetzen von Restfeuchtigkeit während des nachfolgenden Lack-Einbrenn-Prozesses zu reduzieren oder zu verhindern. Die Lackierqualität kann weiter verbessert werden, wenn optimierte Pulverlacksysteme, z.B. mit herkömmlichen Entgasungsadditiven versetzte Pulverlacke verwendet werden.

Der Vorteil von erfindungsgemäßen Substraten gegenüber unbehandelten Substratgrundkörpern oder auch herkömmlichen Substraten ist nun, dass selbst bei einer intensiven Vortrocknung bzw. die Verwendung trockener Substrate (z.B. mit 0,5 Gew.-% Restfeuchtigkeit oder weniger, bevorzugt mit 0,3 Gew.-% Restfeuchtigkeit oder weniger) immer eine perfekte Lackabdeckung, d.h. ein homogener, deckender Pulverauftrag, möglich ist.

Schließlich sind die erfindungsgemäßen Substrate auch direkt recyclebar. Dies kann neben der energetischen bzw. thermischen Verwertung auch eine werkstoffliche Verwertung und/oder eine chemische Verwertung sein.

Bei der Verwendung herkömmlicher Leitlacke, d.h. Beschichtungen zur Erhöhung der elektrischen Leitfähigkeit, kann es hingegen zu Problemen aufgrund einer geringen Werkstoffverträglichkeit kommen. Dies führt häufig zu Haftungsproblemen des herkömmlichen Leitlacks auf den Substratgrundkörpern, z.B. von UV-härtenden acrylatbasierten Leitlacken, die auf Polyamidoberflächen aufgebracht werden. Ebenso können aber auch bei einem eventuell nachfolgenden werkstofflichen Recycling des Substrats anhaftende Rückstände eines herkömmlichen Leitlacks die Verwertung der Substratgrundkörper stören.

Die gute Recyclebarkeit der erfindungsgemäßen Substrate resultiert insbesondere auch daher, dass die Werkstoffe des Substratgrundkörpers und der Beschichtung kompatibel sind und die auf dem Substratgrundkörper aufgebrachte Beschichtung nur eine sehr geringe Dicke aufweisen muss, um eine ausgezeichnete Lackierbarkeit zu gewährleisten. Die Anteile des Additivs der Beschichtung an der Gesamtmasse des erfindungsgemäßen Substrats sind damit in Bezug auf ihren Einfluss auf die Wärmeleitung in der Regel auch nach einer Wiederverwendung zur Herstellung eines Substratgrundköpers im Wesentlichen vernachlässigbar. Die Additive und/oder das Matrixpolymer können auch unter diesem Gesichtspunkt problemlos in Bezug auf die Kompatibilität (z.B. Mischbarkeit) mit dem Werkstoff des Substrats ausgewählt werden.

Bevorzugt wird das Matrixpolymer so ausgewählt, dass es mit dem ersten Polymer molekular oder mikroskopisch mischbar ist, wobei bevorzugt das Matrixpolymer und das erste Polymer der gleichen Polymergruppe entstammen, und wobei besonders bevorzugt das Matrixpolymer und das erste Polymer vom selben Polymertyp sind.

Eine Polymergruppe stellt dabei eine Kategorie verschiedener Polymere dar, welche sich z.B. im Molekulargewicht, in der Anordnung bzw. der Abfolge der Wiederholungseinheit(en) unterscheiden, jedoch gleiche Kategorisierungs-Merkmale aufweisen, z.B. eine Verknüpfung via Amid- oder Esterbindungen bei den Polymergruppen der Polyamide oder respektive der Polyester oder den Aufbau aus Vinyl-Monomeren wie bei der Polymergruppe der Vinylpolymere.

Polymertypen sind einzelne Polymere einer Polymergruppe mit chemisch gut definiertem Aufbau (Monomer, Abfolge), wie z.B. Polyamid 6, welches aus $\varepsilon$-Caprolactam aufgebaut wird. Diese können sich ebenfalls, z.B. im Molekulargewicht, in der Anordnung und/oder der Abfolge der Wiederholungseinheit(en) unterscheiden.

Erfindungsgemäß werden das erste Polymer und das Matrixpolymer aus der Polymergruppe Polyamid, Polyester, Polyether, Polyketon, Polyvinyl, Polyolefin, Polycarbonat sowie Copolymeren und funktionalisierten Polymeren hiervon ausgewählt.

Bei den Polyvinyl-Polymeren eignet sich insbesondere syndiotaktisches Polystyrol (sPS) oder ein Styrol-Copolymer wie ABS (Acrylnitril-Butadien-Styrol), ASA (Acrylnitril-Styrol-Acrylat) und/oder SAN (Styrol-Acrylnitril) als erstes Polymer und Matrixpolymer.

Fälle, in denen das erste Polymer und das Matrixpolymer identisch sind, sind bevorzugt, jedoch kann es gewünscht sein, dass für bestimmte Anwendungsfälle als Beschichtung ein Matrixpolymer gewählt wird, welches bewusst andere Eigenschaften aufweist. Dies kann ein Matrixpolymer sein, welches sich im Vergleich zum ersten Polymer unter anderem unterscheidet in Bezug auf die Feuchtigkeitsaufnahme, die Kosten, den Schmelz- oder Erweichungspunkt bzw. -bereich, die Kristallisationstemperatur, die Kristallinität, die Dampf- und/oder Gasdurchlässigkeit.

Besonders bevorzugt wird gemäß der vorliegenden Erfindung das erste Polymer und/oder das Matrixpolymer aus der Polymergruppe der Polyamide ausgewählt, wobei weiter bevorzugt

a) das erste Polymer ein Polyamid 66, ein Polyamid 6 oder ein teilaromatisches Polyamid ist, und/oder

b) das Matrixpolymer ein Polyamid 6, ein Polyamid 66, ein Polyamid 610 oder ein Polyamid 410 ist.

Bevorzugte Paarungen von erstem Polymer und Matrixpolymer sind:

- erstes Polymer und Matrixpolymer: Polyamid; Lösemittel in der Beschichtungszusammensetzung: Kresol und/oder Methansäure;

- erstes Polymer und Matrixpolymer: Polyester; Lösemittel in der Beschichtungszusammensetzung: Kresol;

- erstes Polymer und Matrixpolymer: syndiotaktisches Polystyrol; Lösemittel in der Beschichtungszusammensetzung: organische Lösemittel, z.B. Toluol, Ethylacetat.

- erstes Polymer und Matrixpolymer: Polycarbonat; Lösemittel in der Beschichtungszusammensetzung: organische Lösemittel, z.B. Dichlormethan.

Besonders bevorzugte Paarungen sind:

Erstes Polymer: Polyamid 66;
Matrixpolymer: Polyamid 6 oder Polyamid 66;
Lösemittel in der Beschichtungszusammensetzung: Methansäure oder hierauf basierende Zubereitungen.

Passend zum Matrixpolymer und zum ersten Polymer des Substratgrundkörpers wird auch ein Lösemittel gewählt, welches als Prozesshilfsmittel in der Beschichtungszusammensetzung eingesetzt wird. Das Lösemittel kann dabei ein flüssiger chemischer Reinstoff z.B. eine organische Flüssigkeit (chemische, organische Verbindung in flüssiger Form) oder eine Mischung solcher Reinstoffe sein. Das Lösemittel wird genutzt, um eine applizierbare Form der Beschichtungszusammensetzung, enthaltend das Matrixpolymer, und des Additivs zur Verminderung des Oberflächenwiderstands einzustellen. Das Lösemittel, gegebenenfalls in Form eines Lösemittelgemisches, kann dabei auch bei erhöhter Temperatur, im Extremfall auch bis hin zum Siedepunkt oder zum Zersetzungspunkt, eingesetzt werden.

Das Lösemittel lässt sich bevorzugt rückstandfrei, z.B. durch Ablüften, Neutralisation, Zersetzung oder Auswaschen aus der Beschichtung entfernen und ist dabei idealerweise kostengünstig, umweltfreundlich, leicht handhabbar, ungiftig und beeinträchtigt nicht die Verarbeitungsprozesse oder die Produkteigenschaften. Organische Lösemittel sind bevorzugt.

Bevorzugt sind das erste Polymer und das Matrixpolymer im gleichen Lösemittel bzw. in dem in der Beschichtungszusammensetzung enthaltenen Lösemittel löslich. Im Fall, dass das erste Polymer ein sehr hohes Molekulargewicht aufweist oder in (teilweise) vernetzter Form vorliegt, sollte das erste Polymer bevorzugt zumindest unter Aufnahme des gewählten Lösemittels quellbar sein.

Bevorzugte Lösemittel sind - je nach Polymer unterschiedliche - organische Flüssigkeiten, insbesondere aromatische Kohlenwasserstoffe und/oder carboxylierte Kohlenwasserstoffe, anorganische Säuren, Mineralsäuren sowie Mischungen oben genannter Substanzen und wässrige Lösungen hiervon. Ebenso sind auch halogenierte flüssige Verbindungen einsetzbar, z.B. halogenierte Essigsäure (Trichloressigsäure, Trifluoressigsäure), Hexafluorisopropanol oder Dichlormethan sowie Mischungen dieser als Lösemittel einsetzbaren Flüssigkeiten. Bei den aromatischen Kohlenwasserstoffen sind Kresol, Xylol und Toluol besonders bevorzugt. Bei den carboxylierten Kohlenstoffen sind Methansäure und Ethansäure besonders bevorzugt. Bei den Mineralsäuren sind Schwefelsäure und Phosphorsäure besonders bevorzugt. Weiter sind organische Ester, Ether, Alkohole, Aldehyde, Ketone oder Carbonate einsetzbar, wie z.B. Ethylacetat, Butylacetat, Tetrahydrofuran, Dioxan, Ethanal, Butanon und Propylencarbonat, sowie Mischungen hiervon.

Die erfindungsgemäßen Beschichtungszubereitungen lassen sich leicht so formulieren, dass sie auch auf komplexe Konturen der Substratgrundkörper aufgetragen werden können, insbesondere mittels Sprühen, Drucken, Stempeln, Gießen, Streichen, Rakeln, mittels Transferrollen usw.

Das Lösemittel trägt insbesondere dazu bei, dass sich die Zusammensetzung der Beschichtung - insbesondere das Matrixpolymer - fest mit dem Werkstoff des Substratgrundkörpers - dem ersten Polymer - verbindet, z.B. durch Interdiffusion von Kettenmolekülen.

Methansäure oder eine Mischung, die Methansäure enthält (z.B. mit 50 Gew.-% Methansäure oder mehr), ist ein besonders bevorzugter Bestandteil bzw. ein Lösemittel für die Beschichtungszusammensetzung, da Methansäure ausreichend flüchtig ist, sich rückstandsfrei entfernen lässt und eine breite Palette von Polymeren (insbesondere Polyamide) zu lösen bzw. anzulösen oder zu quellen vermag.

Bei bestimmten Ausführungsformen der Erfindung liegt das erste Polymer in dem Polymermaterial als Blend mit einem zweiten Polymer vor. Besonders bevorzugt sind hierbei Blends mit einer kontinuierlichen Phase aus Polyamid und z.B. PPE oder PS oder PS-haltigen Copolymeren oder Polyacrylate oder Polyolefine als dispergierte, diskontinuierliche Phase, da hierbei ebenfalls die vorher genannten bevorzugten Paarungen von erstem Polymer und Matrixpolymer für Polyamide Anwendung finden können.

Bei bevorzugten Ausführungsformen der Erfindung umfasst das Polymermaterial des Substratgrundkörpers Verstärkungsstoffe, insbesondere ausgewählt aus partikel- und faserförmigen Verstärkungsstoffen, weiter bevorzugt ausgewählt aus Glaskugeln, Glashohlkugeln, Glasfasern, Kohlefasern, Keramikfasern, Keramikpartikeln oder Polymerfasern. Auch Mahlglaspartikel sind als partikelförmiger Verstärkungsstoff bei erfindungsgemäßen Substratgrundkörpern geeignet.

Bevorzugt wird das Additiv zur Verminderung des Oberflächenwiderstands der Beschichtung aus elektrisch nicht isolierenden Materialien ausgewählt und vor allem ausgewählt aus Kohlenstoff-basierten Komponenten, insbesondere leitfähigem Ruß (Leitruß), Carbon-Nanotubes (CNT), Kohlefasern, Kohlenstoffschichtmaterialien, insbesondere Graphit, Graphen und Graphenoxid, elektrisch leitfähiger Keramik, insbesondere halbleitfähigen Zinnoxiden, elektrisch leitfähigen organischen Verbindungen, leitfähigen Polymeren, Metallpulvern und Metallfasern. Dabei ist es wichtig, jeweils eine Konzentration des Additivs zu wählen, welche eine ausreichende elektrische Leitfähigkeit der Beschichtung, z.B. durch Ausbildung einer Perkolationsstruktur mit sich bringt und somit die Senkung des elektrischen Widerstands in den Zielbereich (d.h. ein spezifischer Oberflächenwiderstand von $10^{10}$ Ohm oder weniger) ermöglicht. Diese Konzentration hängt u.a. von Form, Ausrichtung oder intrinsischer Leitfähigkeit der Teilchen (Partikel, Fasern etc.) des Additivs ab.

Leitruß, CNT oder Kohlefaser ist als chemisch inertes elektrisch leitfähiges Additiv als Additiv für die Verminderung des Oberflächenwiderstands besonders bevorzugt.

Bei den halbleitfähigen Zinnoxiden sind insbesondere das Indium-dotierte und das Fluor-dotierte Zinnoxid (ITO bzw. FTO) bevorzugt.

Der spezifische Oberflächenwiderstand der erfindungsgemäßen Beschichtung des Substratgrundkörpers lässt sich nicht nur durch die Auswahl des Additivs, sondern auch über die Variation von dessen Gehalt in der Beschichtung variieren.

Die Partikelgröße des Additivs zur Verminderung des Oberflächenwiderstands muss an die jeweils verwendete Beschichtungszusammensetzung, den Applikationsprozess sowie die gewünschten Eigenschaften der Beschichtung (Schichtdicke, Homogenität, Flächengewicht trocken, Leitfähigkeit etc.) angepasst werden.

Bei einer Applikation der Beschichtungszusammensetzung durch Sprühen gibt z.B. der Durchmesser der Sprühdüse die maximale Partikelgröße vor.

Bevorzugt sind Partikel mit einem mittleren Durchmesser (Medianwert) von 50 $\mu$m oder weniger, besonders bevorzugt sind Partikel mit einem mittleren Durchmesser (Medianwert) von 10 $\mu$m oder weniger. Der Medianwert lässt sich durch händisches Ausmessen von elektronenmikroskopischen Aufnahmen ermitteln. Die Länge der Partikel kann dabei ein Vielfaches des Durchmessers der Partikel erreichen, insbesondere wenn faserförmige Additive wie Kohlefaser oder CNT eingesetzt werden. Weiter bevorzugt sind Nanopartikel.

Der Quotient aus der Länge des Partikels und dessen Durchmesser gibt das Aspektverhältnis wieder. Ein hohes Aspektverhältnis ist bevorzugt, da hierbei die Wahrscheinlichkeit der Ausbildung eines sogenannten Perkolationspfades zur Ableitung von elektrischer Ladung steigt und somit gegebenenfalls die Additivkonzentration verringert werden kann.

Das Aspektverhältnis A wird dabei definiert durch den Quotienten der Länge L in einer Raumrichtung, z.B. x oder y, und der Dicke D (z.B. von plättchenförmigen Partikeln oder von stäbchen- oder faserförmigen Partikeln) in einer senkrecht zu x bzw. y stehenden Raumrichtung z. Somit gilt die Beziehung

$$A = L/D.$$

Beispielsweise kann man Kohlefasern, z.B. gemahlene oder geschnittene Kohlefasern mit einer Dicke von ca. 5 $\mu$m bis ca. 10 $\mu$m und Längen von mehreren hundert $\mu$m bis zu wenigen mm, einsetzen, wobei sich bis zu vierstellige Aspektverhältnisse ergeben können. Ebenso kann Leitruß eingesetzt werden; dabei liegen längliche, verzweigte Überstrukturen (Aggregate und Agglomerate) aus Primärpartikeln vor, wobei die Überstrukturen einige hundert nm bis zu mehreren $\mu$m Länge aufweisen und die Primärpartikel selbst im Wesentlichen sphärisch sind und einen Durchmesser von ca. 100 nm oder weniger aufweisen.

Die Beschichtung auf dem Oberflächenbereich des Substrats weist bevorzugt eine mittlere beobachtbare Dicke von ca. 100 $\mu$m oder weniger, insbesondere ca. 0,1 $\mu$m bis ca. 50 $\mu$m, weiter bevorzugt ca. 0,1 $\mu$m bis ca. 25 $\mu$m, auf. Eine gewisse Schwankung der Schichtdicke kann toleriert werden, da dies die Funktion und auch die Optik in der Regel nicht stört.

Die erfindungsgemäß auf dem Oberflächenbereich des Substrats aufgebrachte Beschichtung kann vielfältig ausgestaltet sein, insbesondere auch als durchgängige, vollflächige oder großflächige Beschichtung. Die Beschichtung kann einseitig, mehrseitig oder allseitig auf den Substratgrundkörper aufgebracht werden.

Ebenso ist es aber möglich, eine in der Endanwendung nicht sichtbare Fläche mit der erfindungsgemäßen Beschichtung auszurüsten, insbesondere die Rückseite eines Substratgrundkörpers oder innenliegende Bereiche wie Hohlkammern in Hohl(kammer)profilen, da die vorliegenden elektrostatischen Effekte auch über geringe Strecken von wenigen Millimetern auch durch den Substratkörper hindurch wirken können und die dann unbeschichtete Sichtseite elektrostatisch lackierbar machen.

Für bestimmte Anwendungsfälle können auch kleinflächige, punktuell, zeilenweise oder bereichsweise aufgebrachte Beschichtungen von Bedeutung sein. Die Beschichtung kann auch in Form von Mustern, Zahlen, Zeichen, Zeichnungen oder Buchstaben aufgebracht werden; dies wird dann genutzt, um z.B. eine spezifische Dekoration der Substrate zu ermöglichen. Hier wird dann die Beschichtung selektiv auf einem oder mehreren vorgegebenen Oberflächenbereich/en des Substratgrundkörpers aufgebracht, welche/r für eine nachfolgende elektrostatische Beschichtung, insbesondere eine Pulverlackierung, vorgesehen ist/sind oder welche/r im Wesentlichen parallel zu einem Oberflächenbereich des Substrats verläuft/verlaufen, welcher für eine elektrostatische Beschichtung, insbesondere eine Pulverlackierung, vorgesehen ist.

Ebenfalls lassen sich damit konkrete Strukturen, z.B. Leiterbahnen auf Substrate drucken die im Nachgang, auch nach einem Lackierprozess, dazu dienen können um aus dem Substrat selbst ein elektronisches Bauteil herzustellen. Man kann somit z.B. auf einem derart ausgerüsteten Isolierprofil mit aufgedruckten Leiterbahnen nachträglich Komponenten (Schalter, Leuchtdioden, Sende-/empfängermodule, Aktoren, Peltierelemente, Piezoelemente, Solarzellen, Stromspeicher Sensoren für Feuchte, Temperatur, Vibrationen/Schall, Druck/Zug oder weitere elektrotechnische Komponenten) integrieren um sogenannte intelligente oder elektronisch funktionalisierte Isolierprofile herzustellen. Vorteilhaft ist in diesem Fall dann auch eine elektrische Kontaktierung der Metallhalbschalen (z.B. die innere und äußere Aluminiumhalbschale eines Aluminiumfensters) zur Strom- oder Signalübertragung.

Besondere Bedeutung hat die vorliegende Erfindung bei Substraten, die als Wärmedämmprofil, insbesondere für die Herstellung von Fenster-, Türen-, Dach- oder Fassadenelementen, ausgebildet ist. Die Substrate können insbesondere auch ein Hohlprofil oder porös bzw. teilporös ausgeführte Profile als Substratgrundkörper umfassen. Diese Wärmedämmprofile liegen in den oben beschriebenen Anwendungen oftmals fest verbunden mit Metallprofilen (z.B. Aluminium- Rahmenprofilen) vor.

Generell lässt sich die vorliegende Erfindung auch bei einem Substrat realisieren, welches als Formteil für eine Anwendung im Außenbereich ausgelegt ist, insbesondere als Formteil mit der Funktion eines Halteelements, Zierelements oder eines Abdeckelements.

Über das verwendete Matrixpolymer, das Additiv und die Zusammensetzung der Beschichtung lässt sich auch die Bewitterungs- und/oder UV-Stabilität erhöhen, so dass die erfindungsgemäßen Produkte eine deutlich verbesserte Stabilität in diesen Einsatzszenarien aufweisen.

Als Substrate sind erfindungsgemäß von besonderer Bedeutung:
Formteile mit der Funktion eines Halteelements oder Abdeckelements im Bereich der Anlagentechnik für erneuerbare Energien, z.B. Windkraft-, Solarenergie-, Wasserkraftanlagen, oder auch im Bereich des Automobilbaus, des Transportwesens, für Gartengeräte sowie für Sport- und Freizeitgeräte oder für Einhausungen für elektrische oder elektronische Anlagen und Geräte. Bevorzugt sind insbesondere Anbauteile für Fortbewegungsmittel (PKW, Motorrad, Fahrrad, Roller, etc) wie z.B. Stoßfänger, Radkappen, Kotflügel, Hauben, Türen, Luken, Klappen.

Erfindungsgemäß bevorzugt sind Matrixpolymere, welche die nachfolgend beschriebenen Lackierprozesse ohne wesentliche Zersetzung überstehen. In Pulverlackierprozessen werden Substrate typischerweise Temperaturen um ca. 200 °C für mehrere Minuten ausgesetzt, aus diesem Grund wird eine Temperaturstabilität von ca. 200 °C oder mehr, bevorzugt ca. 250 °C oder mehr, gewünscht. Die Substrate müssen bei diesen Temperaturen ausreichend formbeständig sein, damit die Weiterverwendbarkeit der beschichteten und lackierten Substrate, sowie die Funktionalität der daraus hergestellten Produkte weiterhin gegeben ist.

Daneben sind auch Lackierprozesse bekannt die bei höheren Temperaturen ablaufen müssen, dies sind in der Regel Lacksysteme für high-end-Anwendungen z.B. PVDF-Pulverlacke. Es ist offensichtlich, dass für diese Prozesse entsprechend die Temperaturstabilität und Formbeständigkeit des Substrats angepasst werden muss wie dies dem Fachmann geläufig ist.

Unter der Temperaturstabilität wird nicht nur der Schmelz- oder Erweichungspunkt oder -bereich eines Polymers verstanden, sondern die Temperatur, bis zu der das Polymer ausreichend stabil in Bezug auf thermische Zersetzung (Depolymerisation, Thermolyse, Thermooxidation, Hydrolyse, Ausgasung etc.) ist. Messbare Parameter zur Prüfung der Temperaturstabilität sind z.B. der Masseverlust mittels Thermogravimetrie, die Oxidation-Induction-Time oder die Bestimmung von mechanischen Parametern, z.B. Schlagzähigkeit, Biege-, Zug- oder Schälfestigkeiten, sofern dies möglich ist. Die Prüfszenarien sollten dabei die Belastung im Lackierprozess (Einbrenntemperaturen, Haltezeiten, Atmosphäre etc.) sinnvoll wiedergeben. Dies kann z.B. für o.g. Wärmedämmstege (Isolierprofil aus einem Polymerwerkstoff enthaltend PA66 oder mit einer Matrix aus PA66) eine Thermogravimetrische Messung (TGA) an Luft sein, welche ein Temperaturprogramm mit einer Haltezeit von ca. 20 Minuten bei 220 °C vorsieht. Der Masseverlust (ohne Feuchtefreisetzung) sollte dabei weniger als ca. 5 Gew.-%, bevorzugt weniger als ca. 2 Gew.-% betragen.

Die Beschichtung bzw. das Matrixpolymer sollte ebenfalls ausreichend thermisch stabil sein, es werden aber keine hohen Anforderungen an die mechanische Belastbarkeit gestellt, da in der Regel der Substratgrundkörper tragend ist.

Erfindungsgemäß sind ebenfalls Beschichtungen mit vermindertem spezifischem Oberflächenwiderstand bevorzugt, welche UV-stabil und/oder witterungsbeständig sind. Prüfszenarien sind z.B. in der DIN EN ISO 4892 beschrieben. Als UV-stabil bzw. witterungsbeständig im Sinne der vorliegenden Erfindung werden Beschichtungen bewertet, welche für eine Anwendung relevante Eigenschaften aufweisen (z.B. Schlagzähigkeit, Festigkeit, Glanzgrad, Oberflächenrauheit, Riss- und Bruchverhalten), die sich nach UV-Exposition oder Bewitterung geringfügig oder nicht verschlechtern. Als geringfügige Verschlechterung werden hierbei insbesondere Verschlechterungen um bis zu 20 % (bezogen auf die initialen Eigenschaften) betrachtet, d.h. UV-stabile bzw. witterungsbeständige Produkte behalten 80 % der initialen Eigenschaften oder mehr nach abgeschlossener (UV-)Bewitterung. Die Dauer einer UV-Exposition oder Bewitterung wird einer Anwendung entsprechend sinnvoll gewählt, dies kann z.B. 300 Stunden, 500 Stunden oder 600 Stunden oder länger sein.

Als besonders UV-stabil haben sich beispielsweise Polyamid-Polymere mit Leitruß als Additiv zur Verminderung des Oberflächenwiderstands erwiesen, z.B. mit ca. 5 Gew.-% Rußanteil in der Oberflächenschicht oder mehr.

Die Erfindung betrifft des Weiteren Substrate mit einer Lackschicht oder einer Pulverlackschicht, welche insbesondere eine Schichtdicke im Bereich von ca. 10 μm bis ca. 300 μm, bevorzugt von ca. 30 μm bis ca. 200 μm aufweist.

Ein weiterer Aspekt der vorliegenden Erfindung betrifft ein Verfahren zur Herstellung elektrostatisch lackierbarerer Polymer-basierender Substrate mit den Merkmalen des Anspruchs 12.

Das erfindungsgemäße Verfahren umfasst:

- das Bereitstellen eines unter Verwendung eines Polymermaterials gefertigten Substratgrundkörpers, wobei das Polymermaterial ein erstes Polymer umfasst,
- das Bereitstellen einer Beschichtungszusammensetzung, umfassend ein Lösemittel, ein in dem Lösemittel gelöstes Matrixpolymer sowie ein den elektrischen Widerstand minderndes Additiv, wobei das Lösemittel so ausgewählt ist, dass das erste Polymer in dem Lösemittel löslich oder quellbar ist, wobei das Matrixpolymer mit dem ersten Polymer kompatibel ist, und wobei das Additiv in der Beschichtungszusammensetzung dispergiert vorliegt,
- das Aufbringen der Beschichtungszusammensetzung auf einen Oberflächenbereich des Substratgrundkörpers unter Bildung einer Oberflächenschicht sowie
- das Entfernen des Lösemittels aus der Oberflächenschicht.

Die erfindungsgemäß verwendete Beschichtungszusammensetzung lässt sich auf beliebig komplexen Oberflächenstrukturen gleichmäßig und dünn auftragen, beispielsweise durch Sprühen, Drucken, Stempeln, Gießen, Streichen, Rakeln, Tauchen und auch mittels Transferrollen.

Die für die jeweilige Verarbeitung notwendige Viskosität der Beschichtungszusammensetzung lässt sich einfach über die Anteile an gelöstem Polymer einstellen. Höhere Anteile von gelösten Polymeren bzw. geringe Anteile von Lösemitteln erhöhen die Viskosität. Ebenso können gezielt weitere Additive zugesetzt werden, dies sind neben den elektrisch leitfähigen Additiven rheologisch wirkende Zusatzstoffe, dispergierende Zusatzstoffe (z.B. Seifen, Kieselsäuren, Polyelektrolyte) oder funktionelle Additive wie z.B. Flammschutzadditive (Metalloxid-hydroxide, organische und/oder halogenierte Flammschutzmittel) oder rezepturverbilligende Füllstoffe (z.B. Siliziumoxid, Glasmehl, Talkum, Gips, Kreide etc.). Dispergiermittel werden dabei hauptsächlich eingesetzt um fein dispergierte elektrisch leitfähige Additive in einer stabilen Dispersion im Lösemittel zu halten bis die Beschichtung erfolgt ist.

Von besonderer Bedeutung sind auch färbende Zusatzstoffe wie Pigmente, Effektpigmente, Farbstoffe oder Fluoreszenzfarbstoffe die in einer Beschichtungszusammensetzung verwendet werden können um u.a. Dekorfunktionen zu übernehmen oder zur Gestaltung von Kopierschutzmerkmalen zu dienen.

Der Lösemittelanteil der erfindungsgemäß verwendeten Beschichtungszusammensetzung trägt dazu bei, dass die Beschichtung fest mit der Oberfläche des Substratgrundkörpers verbunden wird. Dies geschieht durch Ausbildung einer molekularen oder mikroskopischen Mischung des Matrixpolymers und des ersten Polymers des Substratgrundkörpers. Diese Mischung kann sich dabei ohne weiteres Zutun z.B. durch Diffusion bzw. Interdiffusion von Molekülketten der gelösten Polymere des Matrixpolymers und des ersten Polymers spontan einstellen.

Erfindungsgemäß wird durch die Beschichtung eine neue Oberfläche auf dem Substratgrundkörper erzeugt, die z.B. schmiermittelfrei oder mit höherer Rauheit oder mit Haftungs-optimierenden Bestandteilen (z.B. weiteren Additiven oder funktionalisierten Polymeren) ausgeführt ist, so dass bereits dadurch eine verbesserte Haftung der Pulverlacke auf der Oberfläche erzielt wird. Eine separate Nachbehandlung der Oberfläche der Beschichtung kann deshalb vor der Pulverlackierung entfallen, was kostensenkend auf den gesamten Weiterverarbeitungsprozess wirkt.

Ferner reicht es regelmäßig aus, die Beschichtungszusammensetzung in geringen Schichtdicken aufzutragen, so dass die Geometrie der Substratgrundkörper, insbesondere deren Wandstärke, nur unwesentlich verändert wird und auch die Wärmedämmeigenschaften der Substratgrundkörper nahezu unverändert erhalten bleiben.

Gleichzeitig lässt sich durch das Aufbringen der erfindungsgemäßen Beschichtungszusammensetzung auf einem Oberflächenbereich des Substratgrundkörpers dessen optisches Erscheinungsbild verbessern. Man kann somit insbesondere eine neue - visuell als homogen wahrnehmbare - Oberfläche schaffen, die z.B. dann großflächig homogen mattschwarz (d.h. mit geringen Glanzgrad, bevorzugt einem Glanzgrad von 30% oder weniger, besonders bevorzugt einem Glanzgrad von 10% oder weniger) sein kann.

Die Löslichkeit des ersten Polymers in dem Lösemittel ist im Sinne der vorliegenden Erfindung insbesondere dann gegeben, wenn das Lösemittel signifikante Anteile des ersten Polymers in einen gelösten oder dispergierten Zustand überführen kann, z.B. ca. 10 Gew.-% oder mehr des ersten Polymers in einem Lösemittel löslich sind, oder ca. 50 Gew.-% oder mehr des ersten Polymers in einem Lösemittel löslich sind. Besonders bevorzugt sind ca. 98 Gew.-% oder mehr des ersten Polymers in einem Lösemittel löslich.

Die Löslichkeit von Polymeren in einem Lösemittel geht in der Regel auch mit einer Erhöhung der Viskosität der flüssigen Phase, d.h. der entstehenden Lösung einher und lässt sich auch auf diese Weise prüfen.

Weiter bevorzugt ist das erste Polymer in Kontakt mit dem Lösemittel zumindest in einem Umfang quellbar, dass das Polymer unter Quellen ca. 50 g Lösemittel oder mehr pro 100 g Polymer aufnimmt.

Das Entfernen des Lösemittels aus der Oberflächenschicht lässt sich mit unterschiedlichen Verfahren umsetzen, insbesondere mittels Verdunsten und/oder Verdampfen und/oder durch Überführung in leichtflüchtige gasförmige Produkte (Zersetzung, Umwandlung), wobei bevorzugt die Flüchtigkeit des Lösemittels oder dessen Zersetzungsrate erhöht wird. Dies kann durch Absenken des Umgebungsdrucks und/oder durch Temperaturerhöhung erfolgen, insbesondere mittels Einsatz einer Vakuumkammer, von Heizstrahlern, Heizgebläsen etc.

Alternativ kann das Lösemittel herausgewaschen werden: Ein Waschprozess, der das Lösemittel aus dem lösemittelhaltigen Substrat entfernt, nutzt bevorzugt ein mit dem Lösemittel mischbares Agens (zweites Lösemittel oder eine Zubereitung, z.B. eine Neutralisationslösung), wobei dieses Agens ein Nicht-Lösemittel für das Matrixpolymer darstellen sollte. Besonders bevorzugt als Agens sind Wasser oder wässrige Lösungen. Mit solch einem Wasserbasierten Neutralisier- und/oder Waschprozess lassen sich beschichtete Substrate unter anderem besonders gut von anorganischen Säuren befreien, falls diese als Lösemittel in Beschichtungszusammensetzungen eingesetzt werden.

Erfindungsgemäß wird das Lösemittel bevorzugt so ausgewählt, dass die Löslichkeit des Matrixpolymers in dem Lösemittel ca. 1 g/l oder mehr, bevorzugt ca. 5 g/l oder mehr, besonders bevorzugt ca. 50 g/l oder mehr, beträgt. Dies erlaubt den Einsatz ausreichend hoch konzentrierter Beschichtungszusammensetzungen und vermindert den Aufwand beim Entfernen des Lösemittels am Ende des Beschichtungsvorgangs.

Weiter bevorzugt wird das Lösemittel aus flüchtigen chemischen flüssigen Verbindungen ausgewählt, welche insbesondere bei 1 atm einen Siedepunkt oder Zersetzungspunkt von ca. 210 °C oder weniger, besonders bevorzugt einen Siedepunkt oder Zersetzungspunkt von ca. 120 °C oder weniger, aufweisen.

Bei dem erfindungsgemäßen Verfahren wird das erste Polymer ausgewählt aus Polyamid, Polyester, Polyether, Polyketon, Polyolefin, Polyvinyl und Copolymeren und funktionalisierten Polymeren hiervon.

Das Matrixpolymer wird bevorzugt ausgewählt aus Polyamid, Polyester, Polyether, Polyketon, Polyolefin und Polyvinyl.

Als Lösemittel wird eine organische Flüssigkeit ("organisches Lösemittel") bevorzugt, weiter bevorzugt wird ein aromatischer Kohlenwasserstoff, insbesondere Kresol, Xylol oder Toluol, und/ oder carboxylierte Kohlenwasserstoffe, bevorzugt Methansäure oder Ethansäure, oder eine anorganische Säure, insbesondere Schwefelsäure, Phosphorsäure sowie deren Mischungen mit weiteren Flüssigkeiten, oder eine Zubereitung hieraus, z.B. eine Neutralisationslösung und/oder wässrige Lösungen hiervon, verwendet, wobei das den elektrischen Widerstand mindernde Additiv in dem Matrixpolymer verteilt, insbesondere homogen verteilt, vorliegt.

Das erfindungsgemäße Verfahren beinhaltet nach einem weiteren Aspekt der vorliegenden Erfindung nach dem Aufbringen der Beschichtung auf einen Oberflächenbereich des Substratgrundkörpers das elektrostatische Aufbringen eines Lacks, insbesondere eines Pulverlacks, wobei der Pulverlack bevorzugt bei einer Temperatur von ca. 170 °C oder mehr eingebrannt wird, wobei eine Lackhaftung auf dem Oberflächenbereich des Substrats erreicht wird, welche bevorzugt nach einer Gitterschnittprüfung nach DIN EN ISO 2409 einen Gitterschnitt-Kennwert von 0, 1 oder 2, besonders bevorzugt ein Gitterschnitt-Kennwert von 0 oder 1 ergibt.

Die erfindungsgemäßen Substrate werden vor der elektrostatischen Pulverlackierung bevorzugt Trocknungsschritten unterworfen, um z.B. vorab flüchtige Stoffe auszutreiben und somit ein Ausgasen von flüchtigen Stoffen und insbesondere das Freisetzen von Restfeuchtigkeit während des nachfolgenden Lack-Einbrenn-Prozesses zu reduzieren oder zu verhindern.

Hohe Lackabdeckungsquoten, z.B. bei der Verwendung von Standard-Pulverlacksystemen, lassen sich insbesondere auch dann reproduzierbar und prozessstabil erzielen, wenn die Substrate trocken sind, d.h. die im Substratgrundkörper vorliegende Restfeuchtigkeit ca. 0,5 Gew.-% oder weniger, insbesondere ca. 0,3 Gew.-% oder weniger, beträgt. Diese Eigenschaft ist insbesondere für die Lackierprozesse von hygroskopischen Polymerwerkstoffen (z.B. polyamidbasierten Werkstoffen) von Bedeutung, da trockene Polyamidwerkstoffe ohne besondere Ausrüstung zwar keine oder kaum Blasenbildung zeigen, aber dafür auch nur geringe Lackabdeckungsquoten ergeben.

Die erfindungsgemäße Beschichtung kann häufig diffusionsdurchlässig sein, in Ausnahmenfällen ist es aber auch möglich und sinnvoll, über Zusatzstoffe einer Beschichtungszusammensetzung eine Diffusionsbarriere für z.B. Wasserdampf zu schaffen. Hierbei ist bevorzugt, plättchenförmige Füllstoffe mit hohem Aspektverhältnis auszuwählen, diese können ausgewählt sein aus z.B. Graphit, delaminierter/exfolierter Graphit, Graphen, Graphenoxid, Schichtsilicaten (anorganisch oder organophiliert), schichtartigen anorganischen Sulfiden oder schichtartigen anorganischen Oxiden (z.B. layered double hydroxides).

Diese und weitere Vorteile und vorteilhafte Ausgestaltungen der vorliegenden Erfindung ergeben sich aus der folgenden Figurenbeschreibung und den Beispielen.

Es zeigen im Einzelnen:

Figuren 1A bis 1D      eine schematische Darstellung der Herstellung eines erfindungsgemäßen Substrats mit Oberflächenbeschichtung;

Figuren 2A bis 2D      zwei Ausführungsbeispiele eines erfindungsgemäßen Substrats vor und nach einer Pulverlackierung;

Figuren 3A bis 3F      mehrere Ausführungsbeispiele erfindungsgemäßer Substrate;

Figuren 4A bis 4D      weitere Ausführungsbeispiele erfindungsgemäßer Substrate;

Figuren 5A und 5B      Prüfergebnis eines erfindungsgemäßen pulverlackierten Substrats mittels Gitterschnittlinien in unterschiedlicher Vergrößerung;

Figuren 6A und 6B      pulverlackiertes Substrat mit unzureichender Lackabdeckung;

Figuren 7A und 7B      erfindungsgemäß pulverlackiertes Substrat mit vollständiger Lackabdeckung; und

Figur 8      Lackabdeckung im direkten Vergleich von erfindungsgemäß beschichtetem und unbeschichtetem Substrat.

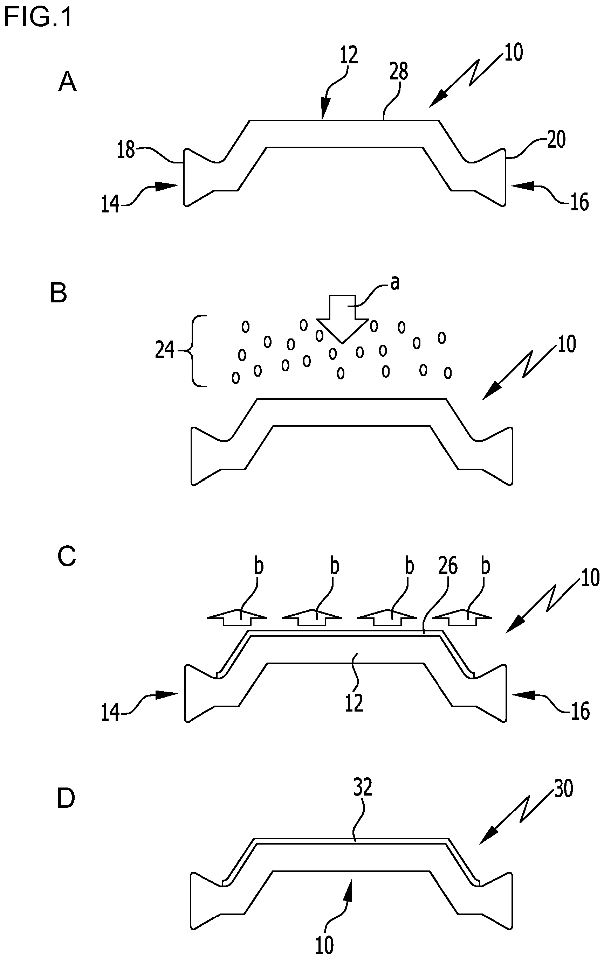

Figur 1 zeigt einen Substratgrundkörper 10 in Form eines sogenannten abgekröpften Isolierprofils im Querschnitt senkrecht zu seiner Längsrichtung.

Der Querschnitt weist beidseits eines planen, mittleren Abschnitts 12 abgekröpfte Bereiche 14, 16 auf, deren freie Ränder als sogenannte Einrollvorsprünge 18, 20 ausgebildet sind. Die Einrollvorsprünge können in entsprechende Ausnehmungen von Metallprofilen eingeführt und durch einen sogenannten "Einroll-Vorgang" schubfest mit dem Metallprofil verbunden werden.

Der Substratgrundkörper 10 ist typischerweise aus einem Polymermaterial gefertigt, beispielsweise basierend auf Polyamid als erstem Polymer.

Figur 1B zeigt schematisch den Vorgang des Aufbringens einer Beschichtung gemäß der vorliegenden Erfindung zur Erzeugung einer Oberfläche mit einem spezifischen Oberflächenwiderstand von $10^{10}$ Ohm oder weniger.

Der Vorgang des Aufbringens der Beschichtung ist hier mit einer Sprühtechnik realisiert, symbolisiert durch einen Sprühnebel 24, der in Pfeilrichtung a auf die in der Figur 1 oben liegende Oberfläche (Sichtseite 28) des Isolierprofils 10 aufgetragen wird.

Die Oberflächenschicht kann beispielsweise als Dispersion von Leitruß in einer Lösung von PA6 in Methansäure aufgetragen werden.

In Figur 1C ist ersichtlich, dass sich auf dem Substratkörper (Isolierprofil) 10 eine über den mittleren Abschnitt 12 und bis in die abgekröpften Bereiche 14, 16 reichende Oberflächenschicht 26 gebildet hat, die in dem in Schritt C der Figur 1 symbolisierten Schritt einer Trocknung unterworfen wird, bei der Lösemittelbestandteile der aufgesprühten Beschichtungsmasse (vgl. Pfeile b) entfernt werden.

In Figur 1D ist dann das fertige erfindungsgemäße Substrat 30 abgebildet, bei dem der Substartgrundkörper 10 mit einer Beschichtung 32 versehen ist, welche einen spezifischen Oberflächenwiderstand von ca. $10^{10}$ Ohm oder weniger aufweist.

Diese in Figur 1 gezeigte Substratform stellt exemplarisch eine einfache Profilgeometrie ohne Hohlkammern, Hinterschnitte oder ähnliches dar, es wird aber explizit darauf hingewiesen, dass das Schema der Figur 1 auch auf viele weitere, u.a. auch hoch komplexe Profile oder Formteile mit dreidimensionalen Strukturen anwendbar ist.

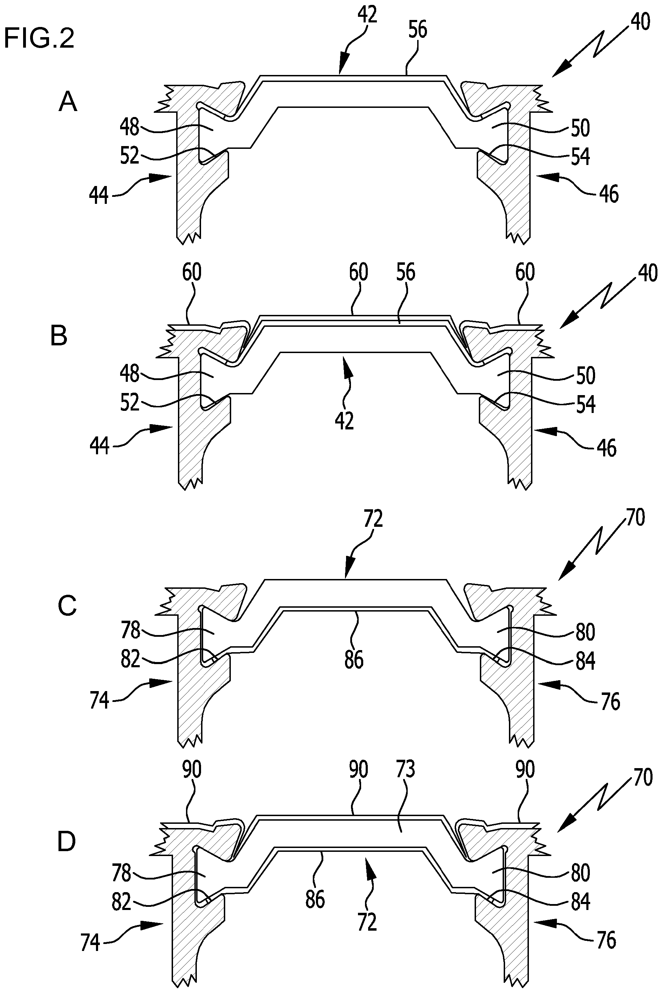

In Figur 2 sind in den Figuren 2A und 2C zwei erfindungsgemäße Polymerbasierende Substrate abgebildet, die nachfolgend mit einer Pulverlackschicht elektrostatisch beschichtet werden (gezeigt in den Figuren 2B und 2D). Auch hier betrachtet man jeweils den Querschnitt senkrecht zur Längsrichtung der Verbundprofile.

In Figur 2A ist der Ausschnitt eines Metall-Kunststoff-Profils 40 gezeigt, welches aus einem Polymer-basierenden Substrat 42 sowie jeweils an dessen Rändern angeschlossenen Metallprofilen 44, 46 gebildet wird. Das Polymerbasierende Substrat 42 ist wieder als Isolierprofil ausgebildet mit beidseits abgekröpft angeformten Einrollvorsprüngen 48, 50, die in jeweils hierzu komplementär ausgebildete Einrollnuten 52, 54 der Metallprofile 44, 46 eingesetzt sind.

Das erfindungsgemäße Substrat 42 (Isolierprofil) weist an seiner oben liegenden und hier von außen zugänglichen Oberfläche erfindungsgemäß eine Beschichtung 56 auf, welche sich analog zu Figur 1D über den in der Figur 2A oben liegenden, Oberflächenbereich des Isolierprofils 42 erstreckt, und zwar bis zu den Einrollvorsprüngen 48 und 50 des Isolierprofils 42.

Beim Einrollen der Einrollprofile 48, 50 in die Einrollnuten 52, 54 der Metallteile 44, 46 wird ein leitender Kontakt mit der Beschichtung 56 hergestellt, so dass hier eine elektrostatische Pulverlackierung von besonders hoher Qualität aufgebracht werden kann.

Die Situation nach der Pulverlackierung der trockenen Substrate ist in Figur 2B dargestellt, bei der sich eine Pulverlackschicht 60 von der Stirnseite des Metallprofils 44 über die Oberfläche der Beschichtung 56 des Isolierprofils 42 bis zur Stirnseite des zweiten Metallprofils 46 erstreckt.

Die elektrostatisch aufgebrachte Lackschicht 60 ist insbesondere sehr gleichmäßig und blasenfrei und weist eine hohe Lackabdeckungsquote auf.

Figur 2C zeigt den Ausschnitt eines Verbundprofils 70 mit einem Polymerbasierendem Isolierprofil 72, das beidseitig von Metallprofilen 74, 76 über eine Einrollverbindung gefasst ist. Hierbei sind Einrollvorsprünge 78, 80 des Isolierprofils (Substrats) 72 in entsprechende Einrollnuten 82, 84 der Metallprofile 74 bzw. 76 eingeführt.

Im Gegensatz zu der Abbildung von Figur 2A ist bei dieser Ausführungsform eine erfindungsgemäß auf dem Substratgrundkörper 73 aufgebrachte Beschichtung 86 mit einem verminderten spezifischen Oberflächenwiderstand nicht an der Sichtseite, sondern auf der Rückseite platziert. Die Beschichtung 86 steht wiederum in elektrisch leitendem Kontakt mit den Metallprofilen 74, 76, indem die Beschichtung 86 bis zu den Einrollvorsprüngen reicht und damit in den Einrollnuten 82, 84 mit den Metallprofilen 74 bzw. 76 in Kontakt kommt.

Eine Pulverlackschicht 90 wird hier wiederum auf der Sichtseite aufgetragen. Sie erstreckt sich wiederum von der Stirnseite des ersten Metallprofils 74 über das Isolierprofil 72 bis zur Stirnseite des zweiten Metallprofils 76. Erneut wird durch die erfindungsgemäß auf dem Substratgrundkörper aufgebrachte Beschichtung 86 mit einem verminderten spezifischen Oberflächenwiderstand von $10^{10}$ Ohm oder weniger die Voraussetzung dafür geschaffen, dass auf der Sichtseite des Verbundprofils 72 eine durchgängige, makellose Lackschicht 90 aufgetragen werden kann, die im Bereich zwischen den Metallprofilen 74, 76 direkt an dem Substratgrundkörper 73 anliegt.

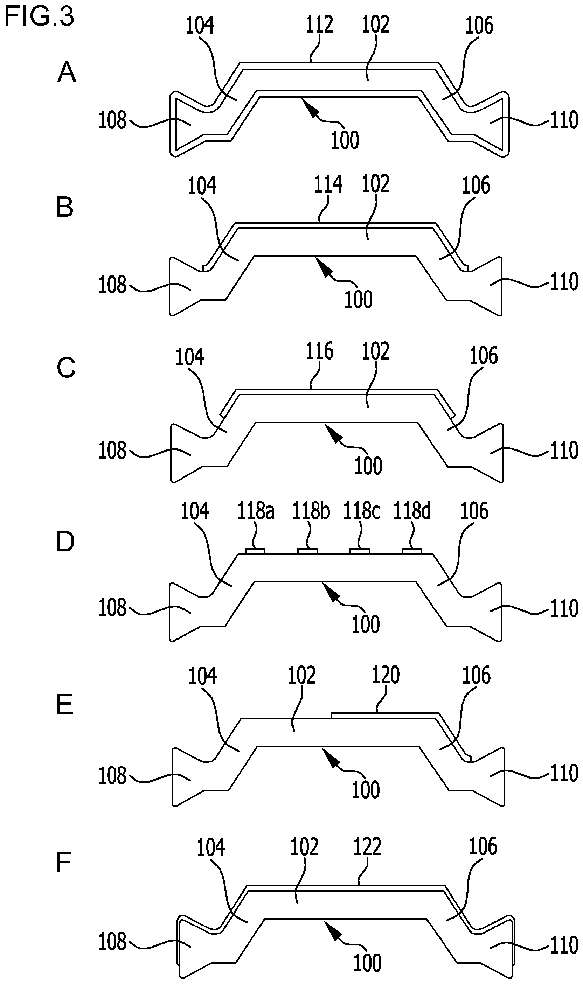

Figur 3 zeigt mit ihren Beispielen in den Teilfiguren 3A bis 3F unterschiedliche erfindungsgemäße Substrate (jeweils in einem Querschnitt senkrecht zur Längsrichtung), die auf dem jeweiligen Substratgrundkörper 100, der die Form eines abgekröpften Isolierprofils aufweist, unterschiedliche Konfigurationen von erfindungsgemäß aufgebrachten Beschichtungen aufweisen.

Der Substratgrundkörper 100 weist neben einem mittleren, planen Abschnitt 102 sich seitlich daran anschließende abgekröpfte Bereiche 104, 106 auf, an die sich dann jeweils sogenannte Einrollvorsprünge 108 bzw. 110 anschließen.

Der Substratgrundkörper 100 der Figur 3A ist mit einer in Umfangsrichtung vollständig umlaufenden Beschichtung 112 versehen, die sich nicht nur beidseits des mittleren Abschnitts 102, sondern auch um die abgekröpften Bereiche 104, 106 sowie die Einrollvorsprünge 108 und 110 erstreckt.

In der Figur 3B ist wiederum der Substratgrundkörper 100 gezeigt, bei dem die erfindungsgemäß aufzubringende Beschichtung 114 sich nur auf einer Seite des mittleren Abschnitts 102 sowie in die daran anschließenden abgekröpften Bereiche 104, 106 (jeweils auch nur einseitig) erstreckt. Damit liegt in der Figur 3B eine Beschichtung der Substratgrundkörpers 100 vor, ähnlich wie dies im Zusammenhang mit der Figur 1D beschrieben wurde.

In Figur 3C ist auf dem Grundkörper 100 im mittleren Abschnitt 102 auf einer Seite eine Beschichtung 116 aufgebracht, die sich beidseits des planen mittleren Abschnitts 102 noch partiell in die abgekröpften Bereiche 104, 106 (ebenfalls nur auf einer Seite) erstreckt. Die weiteren Oberflächenbereiche der abgekröpften Abschnitte 104, 106 sowie die Einrollvorsprünge 108, 110 bleiben beschichtungsfrei.

In einer weiteren Variante ist in Figur 3D das selektive Aufbringen einer Beschichtung gezeigt, wobei die Beschichtung hier in vier parallel laufenden Streifen oder Bahnen 118a, 118b, 118c, 118d aufgeteilt wurde, die sich alle auf der oberen Oberfläche des mittleren Abschnitts 102 des Substratgrundkörpers 100 erstrecken.

Eine andere Variante der selektiven Beschichtung des Substratgrundkörpers 100 ist in Figur 3E gezeigt, wobei sich hier eine erfindungsgemäß aufgebrachte Beschichtung 120 ungefähr über die Hälfte der einen Oberfläche des mittleren Abschnitts 102 sowie über den abgekröpften Bereich 106 (einseitig) erstreckt.

Bei dem sechsten Beispiel der Figur 3 ist in Figur 3F ein erfindungsgemäßes Substrat gezeigt, bei dem der Substratgrundkörper 100 mit einer Beschichtung 122 versehen ist, welche sich sowohl auf einer Oberfläche des mittleren Abschnitts 102, über die gesamten abgekröpften Bereiche 104, 106 (einseitig) als auch bis in die Bereiche der Einrollvorsprünge 108, 110 erstreckt.

Bei den Ausführungsformen der Figuren 3A, 3B, 3E und 3F besteht jeweils die Möglichkeit, die erfindungsgemäß aufgebrachte Beschichtung 102, 114, 120 bzw. 122 mit den Metallprofilen beim Einrollen der Einrollvorsprünge 108, 110 in Kontakt zu bringen, so dass diese beim elektrostatischen Pulverbeschichten ableitend wirken können.

Bei den anderen Ausführungsbeispielen der Figuren 3C und 3D fehlt eine solche ableitende Kontaktierung der Metallprofile, so dass hier ein kapazitiver Effekt zum Tragen kommt. In Figur 3D kann darüber hinaus eine elektrisch leitende Verbindung der separaten Bahnen (nicht gezeigt) vorliegen.

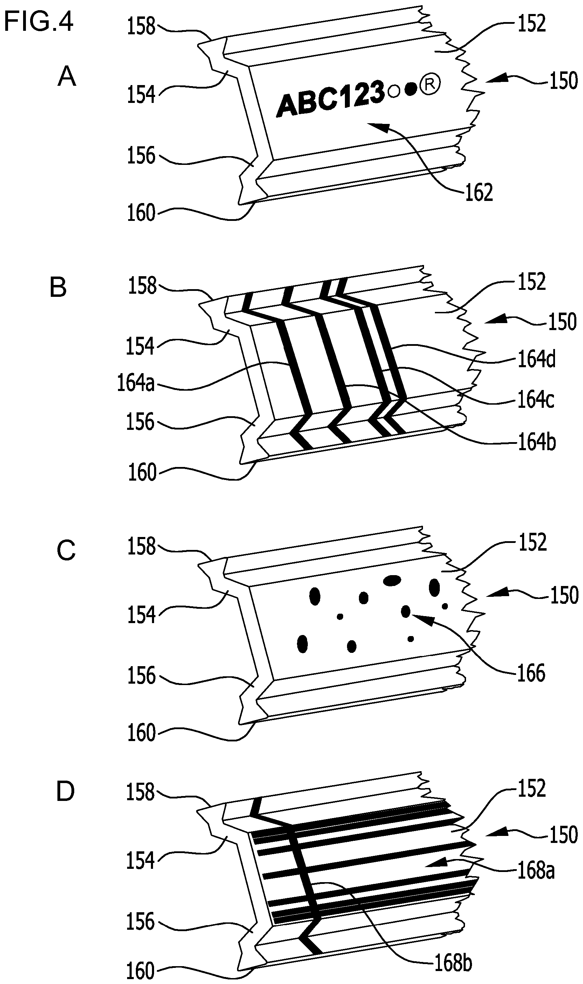

In der Figur 4 sind weitere Ausführungsbeispiele gezeigt, die exemplarisch die Möglichkeit der selektiven Aufbringung einer erfindungsgemäßen Beschichtung auf einen Substratgrundkörper verdeutlichen sollen.

In Figur 4A ist ein Grundkörper 150 mit einem planen mittleren Abschnitt 152, sich seitlich daran anschließenden abgekröpften Bereichen 154, 156 und daran angeformten Einrollvorsprüngen 158, 160 gezeigt. Auf der oben liegenden Oberfläche des mittleren Abschnitts 152 ist eine erfindungsgemäße Beschichtung selektiv in Form der Buchstaben ABC sowie der Ziffern 123, eines Kreises, eines Punkts sowie des Symbols ® aufgebracht, auf die gemeinsam mit dem Bezugszeichen 162 verwiesen wird.

Dieser Schriftzug "ABC 123 ○ ● ®" dient nur als ein Beispiel für beliebige Beschriftungen, die auf diese Weise an der Oberfläche des mittleren Abschnitts 152, gegebenenfalls auch auf anderen Oberflächenbereichen eines Substratgrundkörpers 150, mittels der erfindungsgemäßen Beschichtung aufgebracht werden können. Typischerweise verwendet man hierfür z.B. geeignete Druckersysteme, Stempel oder Schablonen.

Bei der Figur 4B ist auf dem Grundkörper 150 eine Beschichtung mit mehreren Streifen 164a, 164 b, 164c, 164d aufgebracht, wobei die streifenförmigen Beschichtungen 164a, 164b, 164c, 164d sich auf der in der Figur oben liegenden Seite von dem Einrollvorsprung 158 über den abgekröpften Bereich 154, den planen mittleren Bereich 152 in den abgekröpften Bereich 156 und den Einrollvorsprung 160 erstrecken.

Auch hier ist wiederum die Möglichkeit des elektrischen Ableitens über Metallprofile (nicht gezeigt) im eingerollten Zustand des Substratgrundkörpers 150 bei einer elektrostatischen Pulverlackierung gegeben.

In Figur 4C beschränkt sich die Beschichtung wieder auf den oben liegenden Bereich des mittleren Abschnitts 152 des Substratgrundkörpers 150, wobei hier mit dem Bezugszeichen 166 willkürlich angeordnete runde bis ovale, inselförmige Flächenbereiche, die für beliebige andere kleinteilige Muster stehen können, gezeigt sind. Innerhalb der inselförmigen Flächenbereiche wirkt die Beschichtung über einen kapazitiven Mechanismus.

In Figur 4D schließlich ist die Beschichtung wiederum bahnen- bzw. streifenförmig aufgebracht, wobei sich ein erstes Streifenmuster 168a auf der Oberfläche des mittleren Abschnitts 152 in Längsrichtung des Substratgrundkörpers 150 erstreckt, während ein weiteres Element 168b sich senkrecht zu den Längsstreifen des Musters 168a von dem Einrollvorsprung 158 über den abgekröpften Bereich 154, den mittleren Abschnitt 152, den abgekröpften Bereich 156 bis zum Einrollvorsprung 160 erstreckt.

Dadurch, dass der Beschichtungsbereich 168b quer über alle streifenförmigen Abschnitte des Musters 168a verläuft, kann wiederum eine ableitende Funktion gewährleistet werden, wenn der Grundkörper 150 mit Metallprofilen im Einrollverbund vorliegt.

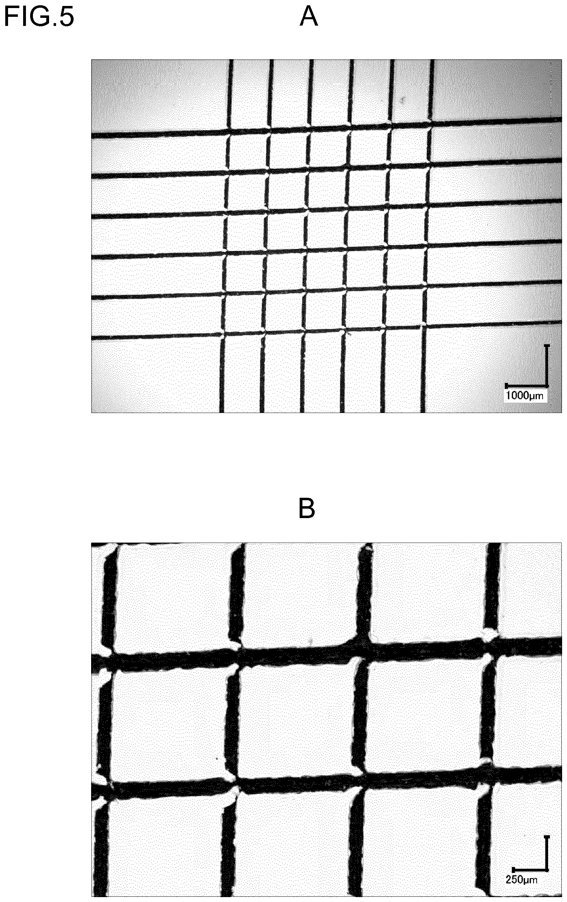

In der Figur 5 ist eine lichtmikroskopische Aufnahme eines erfindungsgemäß ausgerüsteten Profils gezeigt, welches nachfolgend pulverlackiert wurde gemäß dem im Folgenden beschriebenen Beispiel 6.

An dieser Probe wurde der Gitterschnitttest durchgeführt. Die Figuren 5A und 5B zeigen das Ergebnis bei verschiedenen Vergrößerungen (Figur 5A: 30-fach, Figur 5B: 100-fach). Man erkennt einen Gitterschnitt-Kennwert von "0", d.h. klare Schnitte ohne Abplatzungen des hellen Pulverlacks von der dunklen Oberfläche des Substratgrundkörpers; die Lackhaftung ist somit als perfekt einzustufen.

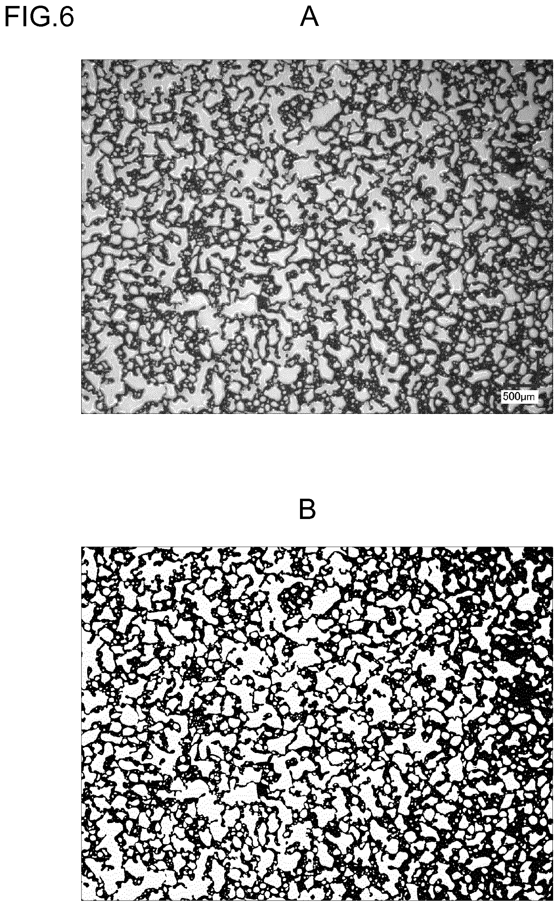

In den Abbildungen der Figur 6 sind lichtmikroskopische Aufnahmen des Lackierergebnisses nach der Pulverlackierung eines Profils gemäß dem im Folgenden beschriebenen Beispiel 3 gezeigt (Figur 6A). Die Aufnahme wurde mit einer 50-fachen Vergrößerung angefertigt. Die Figur 6B zeigt eine schwarz-weiße Variante der Figur 6A, welche durch eine digitale Bildumwandlung erhalten wurde und als Grundlage für eine Bestimmung der Lackabdeckungsquote dient. Anhand der Figur 6B lässt sich eine Lackabdeckungsquote von ca. 56 % ermitteln.

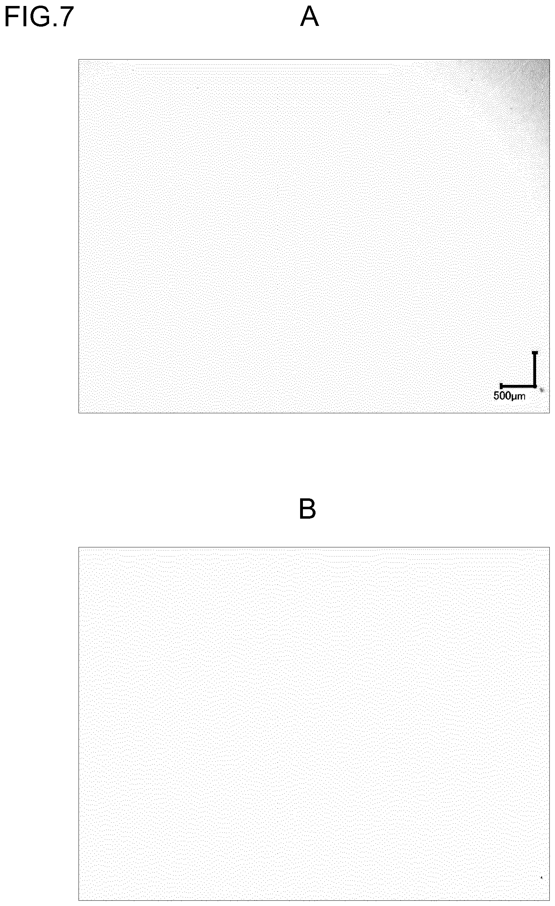

Figur 7 zeigt eine lichtmikroskopische Aufnahme des Lackierergebnisses nach der Pulverlackierung eines Profils gemäß Beispiel 6 (Figur 7A). Die Aufnahme wurde mit einer 50-fachen Vergrößerung angefertigt. Die Figur 7B zeigt eine schwarz-weiße Variante der Abbildung der Figur 7A, welche durch eine digitale Bildumwandlung erhalten wurde und als Grundlage für eine Bestimmung der Lackabdeckungsquote dient. Für Figur 7B wird eine Lackabdeckungsquote von ca. 100 % ermittelt. Die Lackabdeckung ist somit perfekt.

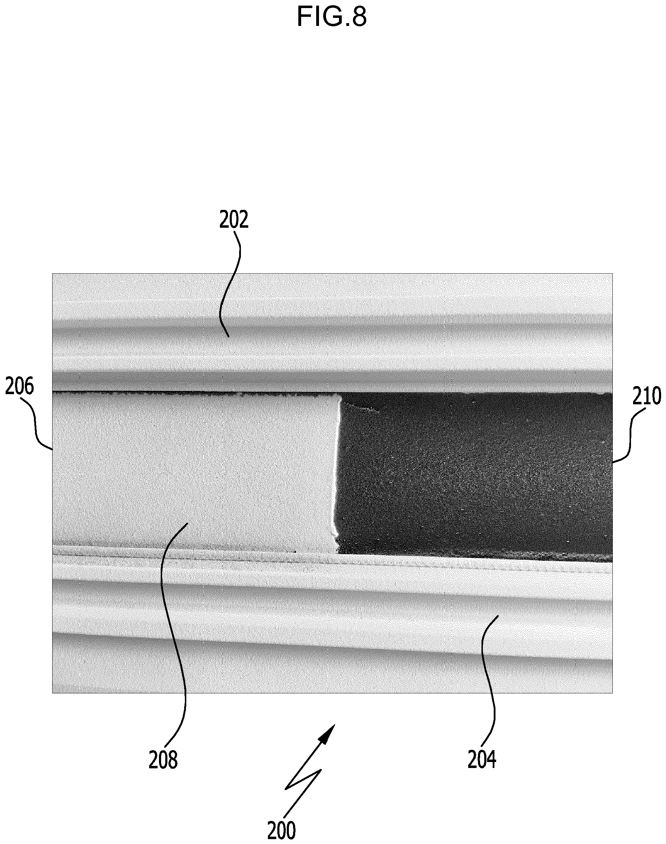

Figur 8 zeigt eine fotografische Aufnahme eines Kunststoff-Aluminium-Verbundprofils 200 mit einem ersten und einem zweiten Metallprofil 202, 204, welche über ein Substrat 206, das als Isolierprofil ausgebildet ist, miteinander verbunden sind, direkt nach dem Aufbringen eines weißen Lackpulvers (elektrostatisches Pulvern), jedoch vor dem Lackeinbrennprozess.

Bei dem linken Bereich 208 des Substrats 206 wurde der Substratgrundkörper vor dem Pulverauftrag erfindungsgemäß mit einer Beschichtung gemäß dem im Folgenden beschriebenen Beispiel 7 mit einer Beschichtung ausgerüstet, wie dies in etwa bei dem Isolierprofil der Figur 3C gezeigt ist. Im rechten Bereich 210 des Substrats 206 wurde der Substratgrundkörper nicht mit einer erfindungsgemäßen Beschichtung ausgerüstet und entspricht somit dem nachfolgend beschriebenen Referenzmuster aus Beispiel 7.

Der Pulverauftrag auf das vorliegende Verbundmuster ist in einem Arbeitsgang auf das getrocknete Verbundprofil erfolgt. Man erkennt deutlich gravierende Unterschiede der Lackabdeckungsquote, die im Bereich 208 annähernd bei 100 % und im Bereich 210 ist mit bloßem Auge eine Lackablagerung kaum zu erkennen.

**Beispiele:**

In den folgenden Beispielen wurde an Substratgrundkörpern (Referenzbeispiele 1 bis 3) bzw. an erfindungsgemäßen Substraten (Beispiele 4 bis 6) der spezifische Oberflächenwiderstand nach einer Lagerung im Normklima und nach einer zusätzlichen Trocknung bestimmt.

Als Substratgrundkörper wurden jeweils extrudierte Isolierprofile verwendet, die Messung des spezifischen Oberflächenwiderstands wurde an der sogenannten Sichtseite 28 des Abschnitts 12 des Substratgrundkörpers 10 bzw. auf der Oberfläche der Beschichtung 32 vorgenommen.

Beispiel 1 (Referenz):

In diesem Beispiel kommt ein massives, extrudiertes Isolierprofil 10 mit einem planen mittleren Abschnitt ähnlich dem in Figur 1A abgebildeten zum Einsatz, wobei das Isolierprofil aus einem Polymermaterial (Polymerblend aus PA66 und PPE mit ähnlichen Gewichtsanteilen) und mit einem Gehalt an Glasfasern (GF) von 10 Gew.-% gefertigt ist. PA66 kommt hier als erstes Polymer zum Einsatz und bildet in dem Blend mit PPE die kontinuierliche Phase, während PPE in mikroskopisch feinen Tröpfchen diskontinuierlich dispergiert vorliegt.

Aus dem Profil wird dann ein planer Prüfkörper gefräst, der sich zur Messung des spezifischen Oberflächenwiderstands eignet.

Die Messwerte für den spezifischen Oberflächenwiderstand, gemessen unter verschiedenen Bedingungen, sind in der Tabelle 1 wiedergegeben.

Beispiel 2 (Referenz):

In diesem Beispiel wird ebenfalls ein massives, extrudiertes Isolierprofil 10 mit einem planen mittleren Abschnitt ähnlich dem in Figur 1A abgebildeten verwendet, wobei das Isolierprofil aus dem Polymermaterial TECATHERM® LO der Fa. Ensinger GmbH gefertigt ist. Es handelt sich dabei um einen Polymerblend aus PA66 und PPE (mit ähnlichen Gewichtsanteilen) mit einem Gehalt an Glasfasern (GF) von 20 Gew.-%. PA66 kommt hier als erstes Polymer zum Einsatz und bildet in dem Blend mit PPE die kontinuierliche Phase, während PPE in $\mu$m-großen Tröpfchen diskontinuierlich dispergiert vorliegt.

Aus dem Profil wird dann ein planer Prüfkörper gefräst, der sich zur Messung des spezifischen Oberflächenwiderstands eignet.

Die Messwerte für den spezifischen Oberflächenwiderstand, gemessen unter verschiedenen Bedingungen, sind in der Tabelle 1 wiedergegeben. Aufgrund des höheren Anteils an Glasfasern ergibt sich im Vergleich zu den Messwerten von Beispiel 1 ein leicht erhöhter spezifischer Oberflächenwiderstand.

Beispiel 3 (Referenz):

In diesem Beispiel wird wiederum ein massiv extrudiertes Isolierprofil 10 mit einem planen mittleren Abschnitt ähnlich dem in Figur 1A abgebildeten verwendet, wobei das Isolierprofil insulbar® REG aus dem Polymermaterial TECATHERM® 66 GF der Fa. Ensinger GmbH gefertigt ist. PA66 liegt hierbei als erstes Polymer vor und ist mit einem Gehalt an Glasfasern (GF) von 25 Gew.-% verstärkt. Aus dem Profil wird dann ein planer Prüfkörper gefräst, der sich zur Messung des spezifischen Oberflächenwiderstands eignet.

Die Messwerte für den spezifischen Oberflächenwiderstand, gemessen unter verschiedenen Bedingungen, sind in der Tabelle 1 wiedergegeben. Aufgrund der anderen Zusammensetzung (kein PPE-Anteil) des Polymermaterials, insbesondere des dadurch höheren Anteils an (Feuchtigkeit aufnehmendem) PA66 ergibt sich im Vergleich zu den Messwerten der Beispiele 1 und 2 ein weiter verringerter spezifischer Oberflächenwiderstand.

Die Lackabdeckungsquote des getrockneten und pulverlackierten Profils beträgt lediglich ca. 56 % und ist somit offensichtlich unzureichend. Die Lackierversuche wurden mit einem weißen Pulverlack der Type SA816G Interpon D1036 (Hersteller: Akzo Nobel Powder Coatings GmbH) durchgeführt. Der Pulverlack wurde dafür mit einer handelsüblichen Pulverpistole für elektrostatische Pulverbeschichtung auf das vorgetrocknete Substrat aufgebracht und in einem Ofen bei 200 °C für 20 Minuten eingebrannt.

Beispiel 4:

In diesem Beispiel kommt als Substratgrundkörper ebenfalls ein Isolierprofil 10, wie in (Referenz-)Beispiel 1 beschrieben zum Einsatz.

Das Isolierprofil 10 wurde nun aber im Gegensatz zu Beispiel 1 erfindungsgemäß mit einer Beschichtung 32 versehen, wie dies aus Figur 1D ersichtlich ist.

Als Beschichtungsmasse zur Herstellung der Beschichtung 32 wurde eine Beschichtungszusammensetzung enthaltend Leitruß hergestellt. Dazu wurde ein kommerziell erhältliches Leitrußkonzentrat vom Typ Hubron NBB310 (Hersteller: Hubron International, Großbritannien) in konzentrierter Methansäure (Konzentration >98%, Carl Roth GmbH + Co. KG) mit einem Feststoffanteil von 50 g/L eingebracht, dispergiert und mittels Sprühbeschichtung auf die Oberfläche des Substratgrundkörpers aufgetragen. Bei dem Leitrußkonzentrat Hubron NBB310 handelt es sich nach Herstellerangaben um Leitruß in einem Matrixpolymer aus PA6 mit geringen Anteilen eines nicht näher spezifizierten Ethylen-Terpolymers als Modifikator.

Die PA6-Masse mit Leitruß wurde beim Einbringen in die Methansäure unter starkem Rühren gelöst und nachfolgend zur Feinverteilung des Leitrußes in der PA6-Methansäure-Lösung mit einem Rotor-Stator-Mischer (Ultra-Turrax der Fa. IKA) weiter dispergiert. Diese Beschichtungszusammensetzung wird zeitnah verwendet um Degradation oder Sedimentation zu vermeiden.

Alternativ lassen sich natürlich auch andere Dispergiertechniken einsetzen, wie z.B. Mahlen in Kugelmühlen, Nassmühlen, Kolloidmühlen oder auch mittels Hochdruckhomogenisatoren, Walzwerken und Ultraschallhomogenisatoren. Dieser Vorgang kann schließlich durch ein- oder mehrmaliges Durchpressen durch feine Düsen, Dekantieren, Filtrieren oder anderweitiges Fraktionieren ergänzt werden, um schlecht dispergierte Grobfraktionen des Leitrußes abzutrennen.

Das Aufsprühen der Beschichtungszusammensetzung auf den Substratgrundkörper erfolgt mittels einer druckluftbetriebenen Farbspritzpistole mit einer Flachstrahldüse (Düsendurchmesser 1,5 mm) wobei der Substratgrundkörper kontinuierlich durch den feinen Sprühnebel bewegt wird, so dass ein dünner aber tiefschwarz-deckender Auftrag erhalten wird, ohne dass sich größere Mengen der flüssigen Beschichtungszusammensetzung ansammeln.

Die Trocknung erfolgt durch Ablüften der Substrate bei Raumtemperatur und guter Lüftung, wobei dies in einem Zeitraum von ca. 0,5 bis 1 Minute abgeschlossen ist und die Substrate danach handtrocken und mattschwarz sind.

Die mittlere Schichtdicke der Beschichtung 32 betrug ca. 1 $\mu$m bis ca. 5 $\mu$m.

Die Messwerte für den spezifischen Oberflächenwiderstand der Beschichtung 32, gemessen unter verschiedenen Bedingungen, sind in der Tabelle 1 wiedergegeben. Im Vergleich zu den Messwerten der Beispiele 1 bis 3 ergibt sich aufgrund des Anteils an Additiv (Leitruß) ein deutlich verringerter spezifischer Oberflächenwiderstand. Der Einfluss des Trocknungsverfahrens auf den gemessenen spezifischen Oberflächenwiderstand ist hier (prozentual) geringer als bei den Referenzbeispielen 1 bis 3.

Beispiel 5:

In diesem Beispiel kommt als Substratgrundkörper ebenfalls ein Isolierprofil 10, beschrieben wie in Beispiel 2 beschrieben zum Einsatz.

Das Isolierprofil 10 wurde nun aber im Gegensatz zu Beispiel 2 erfindungsgemäß mit einer Beschichtung 32 versehen, wie dies aus Figur 1D ersichtlich ist.

Die Beschichtung 32 wurde aus einer Zusammensetzung gemäß Beispiel 4 hergestellt.

Das Versprühen der Beschichtungszusammensetzung auf das Substrat und das Trocknen geschieht analog zu Beispiel 4.

Die mittlere Schichtdicke der Beschichtung 32 betrug ca. 1 $\mu$m bis ca. 5 $\mu$m.

Die Messwerte für den spezifischen Oberflächenwiderstand der Beschichtung 32, gemessen unter verschiedenen Bedingungen, sind in der Tabelle 1 wiedergegeben. Im Vergleich zu den Messwerten der Beispiele 1 bis 3 ergibt sich aufgrund des Anteils an Additiv (Leitruß) ein deutlich verringerter spezifischer Oberflächenwiderstand. Der Einfluss des Trocknungsverfahrens auf den gemessenen spezifischen Oberflächenwiderstand ist auch hier (prozentual) geringer als bei den Referenzbeispielen 1 bis 3.

Beispiel 6:

In diesem Beispiel kommt als Substratgrundkörper ebenfalls ein Isolierprofil 10, beschrieben wie in Beispiel 3 beschrieben zum Einsatz.

Das Isolierprofil 10 wurde nun aber im Gegensatz zu Beispiel 3 erfindungsgemäß mit einer Beschichtung 32 versehen, wie dies aus Figur 1D ersichtlich ist.

Die Beschichtung 32 wurde aus einer Beschichtungszusammensetzung gemäß der Beschreibung in Beispiel 4 erhalten.

Das Versprühen der Beschichtungszusammensetzung auf das Substrat und das Trocknen geschieht ebenfalls analog zu Beispiel 4.

Die mittlere Schichtdicke der Beschichtung 32 betrug ca. 1 $\mu$m bis ca. 5 $\mu$m.

Die Messwerte für den spezifischen Oberflächenwiderstand der Beschichtung 32, gemessen unter verschiedenen Bedingungen, sind in der Tabelle 1 wiedergegeben. Der Einfluss des Trocknungsverfahrens auf den gemessenen spezifischen Oberflächenwiderstand ist hier (prozentual) geringer als bei den Referenzbeispielen 1 bis 3.

Die Lackabdeckungsquote des getrockneten und pulverlackierten Profils beträgt ca. 100% und ist somit perfekt. Die Lackierversuche wurden analog zu Beispiel 3 und ebenfalls mit einem weißen Pulverlack der Type SA816G Interpon D1036 (Hersteller: Akzo Nobel Powder Coatings GmbH) durchgeführt. Der Pulverlack wurde dafür mit einer handelsüblichen Pulverpistole für elektrostatische Pulverbeschichtung auf das vorgetrocknete Substrat aufgebracht und in einem Ofen bei 200 °C für 20 Minuten eingebrannt.

Die Beispiele 1 bis 6 zeigen dabei deutlich dass durch Aufbringung bereits einer dünnen erfindungsgemäßen Beschichtung der spezifische Oberflächenwiderstand deutlich verringert werden kann und somit auch elektrische Leitfähigkeit der Oberfläche resultieren kann. Eine ggf. erwünschte Anpassung des Oberflächenwiderstands ist durch Anpassung der Rezeptierung, beispielsweise mittels Änderung des Anteils des leitfähigen Additivs, einfach möglich.

Beispiel 7:

Ein erfindungsgemäß hergestelltes Isolierprofil 30 mit der Beschichtung 32 wurde zu einem Metall-Kunststoffprofil verarbeitet (analog Figur 2A) und nachfolgend mit einem weißen Pulverlack elektrostatisch zusammen mit einem unbehandelten Isolierprofil (ohne Beschichtung) als Referenz-Beispiel lackiert.

Als Basis diente hierbei ein knochenförmiges Isolierprofil vom Typ insulbar® LO18 der Firma Ensinger GmbH, welches erfindungsgemäß mit einer Dispersion von Hubron NBB310 in Methansäure (Feststoffanteil 50 g/L) beschichtet wurde.

Die Herstellung der Beschichtungszusammensetzung sowie die Durchführung des Versprühens der Beschichtungszusammensetzung entsprechen der Beschreibung in Beispiel 4. Die mittlere Schichtdicke der Beschichtung 32 betrug ca. 1 µm bis 5 µm.

Um die positiven Effekte am erfindungsgemäßen Substrat direkt mit dem unbehandelten Substratgrundkörper vergleichen zu können, wurden zu Versuchszwecken rechteckige Bereiche der Substratgrundkörper abgedeckt und dadurch segmentweise nicht mit der Beschichtung versehen. Somit erhält man Prüfmuster in Form von Substraten (Isolierprofile) die eine direkte Abfolge von gut und schlecht beschichtbaren Bereichen bzw. Segmenten aufweisen (siehe Figur 8).

Die Lackierversuche wurden mit einem weißen Pulverlack der Type SA816G Interpon D1036 (Hersteller: Akzo Nobel Powder Coatings GmbH) durchgeführt. Der Pulverlack wurde mit einer handelsüblichen Pulverpistole für elektrostatische Pulverbeschichtung auf die vorgetrockneten Substrate (<0,1 Gew. % Restfeuchte) aufgebracht und in einem Ofen bei 200 °C für 20 Minuten eingebrannt.

Während auf dem Referenz-Beispiel, also dem Profilsegment 210 ohne erfindungsgemäße Beschichtung keine durchgehend deckende Lackschicht ausgebildet werden konnte (Lackabdeckung mit dem bloßen Auge nicht erkennbar, daher völlig unzureichend), ergab die Pulverlackierung des erfindungsgemäßen Substrats 206 im Bereich 208 eine optisch ansprechende, durchgängige, gleichmäßig weiße Lackschicht mit sehr guter Lackhaftung auf der erfindungsgemäßen Beschichtung 32.

Die Lackhaftung auf dem Substrat im Bereich 208 wurde anhand eines Gitterschnitttests (DIN EN ISO 2409) überprüft, dessen Ergebnis in den Figuren 5A und 5B abgebildet ist. Der ermittelte Gitterschnitt-Kennwert betrug hierbei "0", was das bestmögliche Ergebnis darstellt. Das Lackierergebnis unter Verwendung eines erfindungsgemäßen Substrats ist somit als hervorragend zu bewerten.

Beispiel 8:

Um die mögliche Veränderung der mechanischen Eigenschaften der Substrate 30 durch Kontakt mit einem guten Lösungsmittel für das erste Polymer - in diesem Fall Methansäure - zu bewerten wurden mechanische Prüfungen an unbeschichteten Substratgrundkörpern 10 vom Typ insulbar® REG gemäß Beispiel 3 und an erfindungsgemäß beschichteten Substraten gemäß Beispiel 6 - jeweils ohne durchgeführte Pulverlackierung - durchgeführt.

Mechanische Prüfungen wurden dabei in Form von Zugversuchen mit je einem Satz von n=10 Prüfkörpern durchgeführt; diese wurden aus den verwendeten Isolierprofilen gefräst. Zur Auswertung der Parameter E-Modul, Zugfestigkeit transversal und longitudinal (in Bezug auf die Längsrichtung der Profile) sowie der Bruchdehnung wurde jeweils das arithmetische Mittel gebildet.

Für Beispiel 8a wird ein unbehandelter Substratgrundkörper 10 vom Typ insulbar REG wie beschrieben in Beispiel 7 als Referenz verwendet. Beispiel 8b entspricht dem erfindungsgemäß beschichteten Substrat (Isolierprofil 30 mit der Beschichtung 32) in Beispiel 6. Die Ergebnisse sind in Tabelle 2 zusammengefasst und zeigen, dass das Aufbringen einer Beschichtung 32 die beobachteten mechanischen Parameter des Substratgrundkörpers nicht wesentlich beeinflusst.

Tabelle 1 Realisierte Schichtdicken der Beschichtungen der Beispiele 4 bis 6 liegen im Mittel ca. bei 1 µm bis ca. 5 µm.

| Beispiel | erstes Polymer | Matrix-polymer | leitfähiges Additiv | Werkstoff Sub-strat-grundkörper | Beschichtung | spezifischer Oberflächen-widerstand (Lagerung im Normklima) [Ω] | spezifischer Oberflächen-widerstand nach Trocknung (160 °C/6h) [Ω] |
|---|---|---|---|---|---|---|---|
| 1 | PA66 | ohne | ohne | Blend PA66 mit PPE und 10 % GF | unbeschichtet - Referenz | 5,69 E + 13 | 6,63 E + 14 |
| 2 | PA66 | ohne | ohne | Blend PA66 mit PPE und 20 % GF | unbeschichtet - Referenz | 1,49 E + 14 | 7,20 E + 14 |
| 3 | PA66 | ohne | ohne | PA66 25 % GF | unbeschichtet - Referenz | 4,50 E + 13 | 2,73 E + 14 |
| 4 | PA66 | PA6 | Leitruß | Blend PA66 mit PPE und 10 % GF | Sprühbeschichtung mit Dispersion aus Leitruß-PA6-Compound in Ameisensäure (Feststoffanteil 50 g/L) | 7,79 E + 05 | 1,13 E + 06 |
| 5 | PA66 | PA6 | Leitruß | Blend PA66 mit PPE und 20 % GF | Sprühbeschichtung mit Dispersion aus Leitruß-PA6-Compound in Ameisensäure (Feststoffanteil 50 g/L) | 5,12 E + 05 | 7,73 E + 05 |
| 6 | PA66 | PA6 | Leitruß | PA66 25 % GF | Sprühbeschichtung mit Dispersion aus Leitruß-PA6-Compound in Ameisensäure (Feststoffanteil 50 g/L) | 1,74 E + 05 | 2,02 E + 05 |

Tabelle 2 Veränderung von ausgewählten mechanischen Eigenschaften von Substratgrundkörpern nach Aufbringung einer erfindungsgemäßen Beschichtung

| Beispiel | Substratgrundkörper | Beschichtung | E-Modul [relativ] | Bruchdehnung [relativ] | Zugfestigkeit, longitudinal [relativ] | Zugfestigkeit, transversal [relativ] | Restfeuchte [Gew.-%] |
|---|---|---|---|---|---|---|---|
| 8a - Ref. | insulbar REG | ohne | 100,0% | 100,0% | 100,0% | 100,0% | 0,3 |
| 8b | insulbar REG | mit | 100,5% | 102,4% | 100,1% | 99,3% | 0,3 |

**Patentansprüche**

1. Polymer-basierendes Substrat, welches insbesondere elektrostatisch beschichtbar ist, umfassend

   einen unter Verwendung eines Polymermaterials gefertigten Substratgrundkörper und eine auf einem Oberflächenbereich des Substratgrundkörpers aufgebrachte Beschichtung, wobei das Polymermaterial ein erstes Polymer umfasst, wobei die Beschichtung ein Matrixpolymer und ein in dem Matrixpolymer dispergiertes, den Oberflächenwiderstand der Beschichtung verminderndes Additiv mit einem Anteil umfasst, der so gewählt ist, dass der spezifische Oberflächenwiderstand der Beschichtung ca. $10^{10}$ Ohm oder weniger beträgt, wobei das Matrixpolymer so ausgewählt ist, dass es mit dem ersten Polymer kompatibel ist; und
   wobei das erste Polymer und das Matrixpolymer ausgewählt sind aus den Polymergruppen Polyamid, Polyester, Polyether, Polyketon, Polyvinyl, Polyolefin sowie Copolymeren und funktionalisierten Polymeren hiervon.

2. Substrat nach Anspruch 1, wobei der spezifische Oberflächenwiderstand der Lage mit vermindertem spezifischem Oberflächenwiderstand ca. $10^9$ Ohm oder weniger, weiter bevorzugt ca. $10^8$ Ohm oder weniger, beträgt.

3. Substrat nach Anspruch 1 oder 2, wobei das Matrixpolymer so ausgewählt ist, dass es mit dem ersten Polymer molekular oder mikroskopisch mischbar ist; und/oder
   wobei das erste Polymer und das Matrixpolymer im gleichen Lösemittel löslich oder quellbar sind, wobei das Lösemittel bevorzugt ein Reinstoff oder eine Mischung mehrerer Reinstoffe ist, wobei der Reinstoff oder die Reinstoffe ausgewählt sind aus organischen Flüssigkeiten insbesondere aromatischen Kohlenwasserstoffen, Estern, Ethern, Ketonen, carboxylierten Kohlenwasserstoffen oder anorganischen Säuren, insbesondere Mineralsäuren.

4. Substrat nach einem der Ansprüche 1 bis 3, wobei das erste Polymer und/oder das Matrixpolymer aus der Polymergruppe der Polyamide ausgewählt ist/sind, wobei bevorzugt

   a) das erste Polymer ein Polyamid 66, ein Polyamid 6 oder ein teilaromatisches Polyamid ist, und/oder
   b) das Matrixpolymer ein Polyamid 6, ein Polyamid 66, ein Polyamid 610 oder ein Polyamid 410 ist.

5. Substrat nach einem der Ansprüche 1 bis 4, wobei das erste Polymer in dem Polymermaterial als Blend mit einem zweiten Polymer vorliegt.

6. Substrat nach einem der Ansprüche 1 bis 5, wobei das Polymermaterial Verstärkungsstoffe umfasst, insbesondere ausgewählt aus partikel- und faserförmigen Verstärkungsstoffen, weiter bevorzugt ausgewählt aus Glaskugeln, Glashohlkugeln, Glasfasern, Keramikfasern, Kohlefasern, und/oder Keramikpartikeln und/oder Polymerfasern; und/oder wobei das Additiv zur Verminderung des Oberflächenwiderstands der Beschichtung ausgewählt ist aus Kohlenstoff-basierten Komponenten, insbesondere Leitruß, CNT, Kohlefasern, Kohlenstoffschichtmaterialien, insbesondere Graphit, Graphen und Graphenoxid, elektrisch leitfähigen organischen Verbindungen, leitfähigen Polymeren, elektrisch leitfähiger Keramik, insbesondere halbleitfähigen Zinnoxiden, Metallpulvern und Metallfasern.

7. Substrat nach einem der Ansprüche 1 bis 6, wobei die Beschichtung eine mittlere Dicke von ca. 100 $\mu$m oder weniger, insbesondere ca. 50 $\mu$m oder weniger, weiter bevorzugt ca. 0,1 $\mu$m bis ca. 25 $\mu$m, aufweist.

8. Substrat nach einem der Ansprüche 1 bis 7, wobei die Beschichtung als durchgängige Beschichtung ausgebildet ist; oder
   wobei die Beschichtung selektiv auf einen oder mehrere vorgegebene/n Oberflächenbereich/e des Substratkörpers aufgebracht ist, welche/r für eine nachfolgende elektrostatische Beschichtung, insbesondere einer Pulverlackierung vorgesehen ist/sind oder welche/r im Wesentlichen parallel zu einem Oberflächenbereich des Substrats verläuft/-verlaufen, welcher für eine elektrostatische Beschichtung, insbesondere einer Pulverlackierung vorgesehen ist.

9. Substrat nach einem der Ansprüche 1 bis 8, wobei das Substrat als Wärmedämmprofil, insbesondere für die Herstellung von Fenster-, Türen-, Dach- oder Fassadenelementen ausgebildet ist; oder
   wobei das Substrat als Formteil für eine Anwendung im Außenbereich ausgelegt ist, insbesondere als Formteil mit der Funktion eines Halteelements oder eines Abdeckelements.

10. Substrat nach einem der Ansprüche 1 bis 9, wobei das Matrixpolymer eine Temperaturstabilität von ca. 200 °C oder mehr, bevorzugt ca. 250 °C oder mehr, aufweist; und/oder
    wobei die Beschichtung UV-stabil ist.

11. Substrat nach einem der Ansprüche 1 bis 10, wobei das Substrat eine Pulverlackschicht aufweist, welche insbesondere eine Schichtdicke im Bereich von ca. 10 $\mu$m bis ca. 300 $\mu$m, bevorzugt von ca. 50 $\mu$m bis ca. 200 $\mu$m, aufweist;

wobei optional die Lackschicht auf der Beschichtung im lackierten Bereich eine Lackabdeckungsquote von ca. 90 % oder mehr, insbesondere ca. 98 % oder mehr, aufweist und wobei die Lackschicht bevorzugt eine Pulverlackschicht ist.

12. Verfahren zur Herstellung eines elektrostatisch lackierbaren, insbesondere eines pulverlackierbaren, Polymer-basierenden Substrats, wobei das Verfahren umfasst:

- Bereitstellen eines unter Verwendung eines Polymermaterials gefertigten Substratgrundkörpers, wobei das Polymermaterial ein erstes Polymer umfasst,
- Bereitstellen einer Beschichtungszusammensetzung, umfassend ein Lösemittel, ein in dem Lösemittel gelöstes Matrixpolymer sowie ein den elektrischen Widerstand minderndes Additiv, wobei das Lösemittel so ausgewählt ist, dass das erste Polymer in dem Lösemittel löslich oder quellbar ist, wobei das Matrixpolymer mit dem ersten Polymer kompatibel ist, wobei das erste Polymer und das Matrixpolymer ausgewählt sind aus den Polymergruppen Polyamid, Polyester, Polyether, Polyketon, Polyvinyl, Polyolefin sowie Copolymeren und funktionalisierten Polymeren hiervon, und wobei das Additiv in der Beschichtungszusammensetzung dispergiert vorliegt,
- Aufbringen der Beschichtungszusammensetzung auf einen Oberflächenbereich des Substratgrundkörpers unter Bildung einer Oberflächenschicht, und
- Entfernen des Lösemittels aus der Oberflächenschicht.

13. Verfahren nach Anspruch 12, wobei das Lösemittel so ausgewählt ist, dass das erste Polymer eine Löslichkeit von ca. 10 Gew.-% oder mehr, bevorzugt eine Löslichkeit von ca. 50 Gew.-% oder mehr, weiter bevorzugt eine Löslichkeit von ca. 98 Gew.-% oder mehr, aufweist; oder wobei das Lösemittel so ausgewählt ist, dass das erste Polymer in dem Lösemittel quellbar ist und insbesondere bei einer Temperatur von 23 °C unter Quellen ca. 50 g Lösemittel oder mehr pro 100 g Polymer aufnimmt.

14. Verfahren nach Anspruch 12 oder 13, wobei das Lösemittel aus flüchtigen Lösemitteln ausgewählt ist und bevorzugt einen Siedepunkt oder Zersetzungspunkt von ca. 210 °C oder weniger, besonders bevorzugt einen Siedepunkt oder Zersetzungspunkt von ca. 120 °C oder weniger, aufweist.

15. Verfahren nach einem der Ansprüche 12 bis 14, wobei das Matrixpolymer ausgewählt ist aus Polyamid, Polyester, Polyether, Polyketon, Polyolefin, und Polyvinyl;

wobei das Lösemittel eine organische Flüssigkeit, bevorzugt einen aromatischen Kohlenwasserstoff, insbesondere Kresol, Xylol oder Toluol, und/ oder carboxylierte Kohlenwasserstoffe, bevorzugt Methansäure oder Ethansäure, oder eine Mineralsäure, insbesondere Schwefelsäure, Phosphorsäure sowie deren Mischungen und/oder wässrige Lösungen hiervon, umfasst; und

wobei das den elektrischen Widerstand mindernde Additiv in dem Matrixpolymer im Wesentlichen gleichmäßig verteilt vorliegt und bevorzugt aus Ruß und Kohlefasern ausgewählt wird.

16. Verfahren nach einem der Ansprüche 12 bis 15, wobei auf einen Oberflächenbereich des Substrats nach dem Aufbringen der Beschichtung elektrostatisch mit einem Lackpulver pulverlackiert wird, wobei das Lackpulver bei einer Temperatur von ca. 170 °C oder mehr eingebrannt wird, wobei bevorzugt eine Lackhaftung auf dem Oberflächenbereich des Substrats erreicht wird, welche bevorzugt nach einer Gitterschnittprüfung nach DIN EN ISO 2409 einen Gitterschnitt-Kennwert von 0, 1 oder 2, besonders bevorzugt einen Gitterschnitt-Kennwert von 0 oder 1, ergibt und insbesondere eine homogene Lackabdeckung erzielt wird;

wobei optional die Lackschicht auf der Beschichtung im lackierten Bereich eine Lackabdeckungsquote von ca. 90 % oder mehr, insbesondere ca. 98 % oder mehr, aufweist und wobei die Lackschicht bevorzugt als eine Pulverlackschicht aufgebracht wird.

**Claims**

1. Polymer-based substrate, which in particular is electrostatically coatable, comprising

a substrate base body made using a polymeric material and a coating applied to a surface region of the substrate base body, wherein the polymeric material comprises a first polymer, wherein the coating comprises a matrix polymer and an additive which is dispersed in the matrix polymer and reduces the surface resistance of the coating, said additive having a proportion that is selected such that the specific surface resistance of the coating is about $10^{10}$ Ohm or less, wherein the matrix polymer is selected such that it is compatible with the first polymer; and wherein the first polymer and the matrix polymer are selected from the polymer groups polyamide, polyester, polyether, polyketone, polyvinyl, polyolefin and copolymers and functionalized polymers thereof.

2. Substrate in accordance with Claim 1, wherein the specific surface resistance of the layer with a reduced specific surface resistance is about $10^9$ Ohm or less, further preferably about $10^8$ Ohm or less.

3. Substrate in accordance with Claim 1 or 2, wherein the matrix polymer is selected such that it is molecularly or microscopically mixable with the first polymer; and/or
wherein the first polymer and the matrix polymer are soluble or swellable in the same solvent, wherein the solvent is preferably a pure substance or a mixture of a plurality of pure substances, wherein the pure substance or the pure substances are selected from organic liquids, in particular aromatic hydrocarbons, esters, ethers, ketones, carboxylated hydrocarbons or inorganic acids, in particular mineral acids.

4. Substrate in accordance with any one of Claims 1 to 3, wherein the first polymer and/or the matrix polymer is/are selected from the polymer group of polyamides, wherein preferably

   a) the first polymer is a polyamide 66, a polyamide 6, or a partially aromatic polyamide, and/or
   b) the matrix polymer is a polyamide 6, a polyamide 66, a polyamide 610, or a polyamide 410.

5. Substrate in accordance with any one of Claims 1 to 4, wherein the first polymer in the polymeric material is present as a blend with a second polymer.

6. Substrate in accordance with any one of Claims 1 to 5, wherein the polymeric material comprises reinforcing substances, in particular selected from particulate and fibrous reinforcing substances, further preferably selected from glass spheres, hollow glass spheres, glass fibers, ceramic fibers, carbon fibers, and/or ceramic particles and/or polymer fibers; and/or
wherein the additive for reducing the surface resistance of the coating is selected from carbon-based components, in particular conductive soot, carbon nanotubes (CNT), carbon fibers, carbon layered materials, in particular graphite, graphene and graphene oxide, electrically conductive organic compounds, conductive polymers, electrically conductive ceramic, in particular semiconductive zinc oxides, metal powders and metal fibers.

7. Substrate in accordance with any one of Claims 1 to 6, wherein the coating has an average thickness of about 100 $\mu$m or less, in particular about 50 $\mu$m or less, further preferably about 0.1 $\mu$m to about 25 $\mu$m.

8. Substrate in accordance with any one of Claims 1 to 7, wherein the coating is configured as a continuous coating; or wherein the coating is selectively applied to one or a plurality of predetermined surface region(s) of the substrate body which is/are provided for a subsequent electrostatic coating, in particular a powder lacquering, or which extends/extend substantially in parallel to a surface region of the substrate which is provided for an electrostatic coating, in particular a powder lacquering.

9. Substrate in accordance with any one of Claims 1 to 8, wherein the substrate is configured as a heat-insulating profile, in particular for the production of window, door, roof, or facade elements; or wherein the substrate is designed as a moulded part for an application outdoors, in particular as a moulded part with the function of a holding element or a covering element.

10. Substrate in accordance with any one of Claims 1 to 9, wherein the matrix polymer has a temperature stability of about 200°C or more, preferably about 250°C or more; and/or wherein the coating is UV-stable.

11. Substrate in accordance with any one of Claims 1 to 10, wherein the substrate has a powder lacquer layer which in particular has a layer thickness in the range of about 10 $\mu$m to about 300 $\mu$m, preferably of about 50 $\mu$m to about 200 $\mu$m;
wherein optionally the lacquer layer on the coating in the lacquered region has a lacquer coverage rate of about 90% or more, in particular about 98% or more, and wherein the lacquer layer is preferably a powder lacquer layer.

12. Method for producing an electrostatically lacquerable, in particular a powder lacquerable, polymer-based substrate, wherein the method comprises:

- providing a substrate base body made using a polymeric material, wherein the polymeric material comprises a first polymer,
- providing a coating composition, comprising a solvent, a matrix polymer dissolved in the solvent, and an additive reducing the electrical resistance, wherein the solvent is selected such that the first polymer is soluble or swellable in the solvent, wherein the matrix polymer is compatible with the first polymer, wherein the first polymer and the matrix polymer are selected from the polymer groups polyamide, polyester, polyether, polyketone, polyvinyl, polyolefin and copolymers and functionalized polymers thereof, and wherein the additive is dispersed in the coating composition,
- applying the coating composition to a surface region of the substrate base body while forming a surface layer, and
- removing the solvent from the surface layer.

13. Method in accordance with Claim 12, wherein the solvent is selected such that the first polymer has a solubility of about 10% by weight or more, preferably a solubility of about 50% by weight or more, further preferably a solubility of about 98% by weight or more; or
wherein the solvent is selected such that the first polymer is swellable in the solvent, and in particular at a temperature of 23°C absorbs about 50g of solvent or more per 100g of polymer while swelling.

14. Method in accordance with Claim 12 or 13, wherein the solvent is selected from volatile solvents and preferably has a boiling point or decomposition point of about 210°C or less, particularly preferably a boiling point or decomposition point of about 120°C or less.

15. Method in accordance with any one of Claims 12 to 14, wherein the matrix polymer is selected from polyamide, polyester, polyether, polyketone, polyolefin, and polyvinyl;

wherein the solvent comprises an organic liquid, preferably an aromatic hydrocarbon, in particular cresol, xylene, or toluene, and/or carboxylated hydrocarbons, preferably methane acid or acetic acid, or a mineral acid, in particular sulfuric acid, phosphoric acid and mixtures thereof and/or aqueous solutions thereof; and
wherein the electrical resistance-reducing additive is substantially uniformly distributed in the matrix polymer and is preferably selected from soot and carbon fibers.

16. Method in accordance with any one of Claims 12 to 15, wherein a surface region of the substrate is electrostatically powder lacquered with a lacquer powder after the application of the coating, wherein the powder lacquer is baked at a temperature of about 170°C or more, wherein preferably a lacquer adhesion on the surface region of the substrate is achieved which after a cross-cut test according to DIN EN ISO 2409 preferably results in a cross-cut value of 0, 1, or 2, particularly preferably a cross-cut value of 0 or 1, and in particular a homogeneous lacquer coverage is achieved; wherein optionally the lacquer layer on the coating in the lacquered region has a lacquer coverage rate of about 90% or more, in particular about 98% or more, and wherein the lacquer layer is preferably applied as a powder lacquer layer.

**Revendications**

1. Substrat à base de polymère qui peut être revêtu plus particulièrement de manière électrostatique, comprenant

un corps de base de substrat fabriqué à l'aide d'un matériau polymère et un revêtement appliqué sur une zone de surface du corps de base du substrat, dans lequel le matériau polymère comprend un premier polymère, dans lequel le revêtement comprend un polymère matriciel et un additif dispersé dans le polymère matriciel, réduisant la résistance superficielle du revêtement, avec une part qui est choisie de sorte que la résistance superficielle spécifique du revêtement est égale à environ $10^{10}$ ohms ou moins, dans lequel le polymère matriciel est choisi de façon à être compatible avec le premier polymère ; et
dans lequel le premier polymère et le polymère matriciel sont choisis dans les groupes de polymères suivants : polyamide, polyester, polyéther, polycétone, polyvinyle, polyoléfine ainsi que des copolymères et des polymères fonctionnalisés de ceux-ci.

2. Substrat selon la revendication 1, dans lequel la résistance superficielle spécifique de la couche avec une résistance superficielle spécifique réduite est égale à environ $10^9$ ohms ou moins, de préférence à environ $10^8$ ohms ou moins.

3. Substrat selon la revendication 1 ou 2, dans lequel le polymère matriciel est choisi de façon à pouvoir être mélangé de manière moléculaire ou microscopique avec le premier polymère ; et/ou
dans lequel le premier polymère et le polymère matriciel sont solubles et peuvent gonfler dans le même solvant, dans lequel le solvant est de préférence une substance pure ou un mélange de plusieurs substances pures, dans lequel la substance pure ou les substances pures sont sélectionnées parmi des liquides organiques, plus particulièrement des hydrocarbures aromatiques, des esters, des éthers, des cétones, des hydrocarbures carboxylés ou des acides inorganiques, plus particulièrement des acides minéraux.

4. Substrat selon l'une des revendications 1 à 3, dans lequel le premier polymère et/ou le polymère matriciel est/sont sélectionné(s) dans le groupe de polymères des polyamides, dans lequel, de préférence,

(a) le premier polymère est un polyamide 66, un polyamide 6 ou un polyamide partiellement aromatique et/ou
(b) le polymère matriciel est polyamide 6, un polyamide 66, un polyamide 610 ou un polyamide 410.

5. Substrat selon l'une des revendications 1 à 4, dans lequel le premier polymère est présent dans le matériau polymère en tant que mélange avec un deuxième polymère.

6. Substrat selon l'une des revendications 1 à 5, dans lequel le matériau polymère comprend des matériaux de renforcement, plus particulièrement sélectionnés parmi des matériaux de renforcement sous forme de particules et de fibres, de préférence sélectionnés parmi des billes de verre, des billes de verre creuses, des fibres de verre, des fibres de céramique, des fibres de carbone et/ou des particules de céramique et/ou des fibres de polymères ; et/ou dans lequel l'additif pour la réduction de la résistance superficielle du revêtement est sélectionné parmi des composants à base de carbone, plus particulièrement du noir de carbone conducteur, CNT, fibres de carbone, matériaux à couches de carbone, plus particulièrement le graphite, le graphène et l'oxyde de graphène, des composés organiques électro-conducteurs, des polymères conducteurs, la céramique électro-conductrice, plus particulièrement des oxydes d'étain, des poudres métalliques et des fibres métalliques semi-conductrices.

7. Substrat selon l'une des revendications 1 à 6, dans lequel le revêtement présente une épaisseur moyenne d'environ 100 $\mu$m ou moins, plus particulièrement d'environ 50 $\mu$m ou moins, plus de préférence d'environ 0,1 $\mu$m à environ 25 $\mu$m.

8. Substrat selon l'une des revendications 1 à 7, dans lequel le revêtement est conçu comme un revêtement continu ; ou dans lequel le revêtement est appliqué de manière sélective sur une ou plusieurs zone(s) superficielle(s) prédéterminée(s) du corps de substrat, qui est/sont prévue(s) pour un revêtement électrostatique ultérieur, plus particulièrement une peinture par poudre ou qui s'étend(nt) globalement parallèlement à une zone superficielle du substrat, qui est prévu pour un revêtement électrostatique, plus particulièrement une peinture par poudre.

9. Substrat selon l'une des revendications 1 à 8, dans lequel le substrat est conçu comme un profilé d'isolation thermique, plus particulièrement pour la réalisation d'éléments de fenêtres, de portes, de toitures ou de façades ; ou dans lequel le substrat est conçu comme une pièce moulée pour une utilisation à l'extérieur, plus particulièrement comme une pièce moulée avec la fonction d'un élément de maintien ou d'un élément de recouvrement.

10. Substrat selon l'une des revendications 1 à 9, dans lequel le polymère matriciel présente une stabilité à la température d'environ 200 °C ou plus, de préférence d'environ 250 °C ou plus ; et/ou dans lequel le revêtement est résistant aux UV.

11. Substrat selon l'une des revendications 1 à 10, dans lequel le substrat présente une couche de peinture par poudre qui présente, plus particulièrement une épaisseur de couche de l'ordre d'environ 10 $\mu$m à environ 300 $\mu$m, de préférence d'environ 50 $\mu$m à environ 200 $\mu$m ;
dans lequel, en option, la couche de peinture sur le revêtement présente, dans la zone peinte, un taux de recouvrement de peinture d'environ 90 % ou plus, plus particulièrement d'environ 98 % ou plus et dans lequel la couche de peinture est de préférence une couche de peinture en poudre.

12. Procédé de fabrication d'un substrat pouvant être peint de manière électrostatique, plus particulièrement d'un substrat à base de polymère pouvant être peint par poudre, dans lequel ce procédé comprend :

- mise à disposition d'un corps de base de substrat fabriqué à l'aide d'un matériau polymère, dans lequel le matériau polymère comprend un premier polymère,

- mise à disposition d'une composition de revêtement, comprenant un solvant, un polymère matriciel dissous dans le solvant ainsi qu'un additif réduisant la résistance électrique, dans lequel le solvant est sélectionné de sorte que le premier polymère est soluble ou peut gonfler dans le solvant, dans lequel le polymère matriciel est compatible avec le premier polymère, dans lequel le premier polymère et le polymère matriciel sont sélectionnés dans les groupes de polymères : polyamide, polyester, polyéther, polycétone, polyvinyle, polyoléfine ainsi que des copolymères et des polymères fonctionnalisés de ceux-ci et dans lequel l'additif est présent sous forme dispersée dans la composition de revêtement,

- application de la composition de revêtement sur une zone de surface du corps de base du substrat afin de former une couche superficielle et

- élimination du solvant de la couche superficielle.

13. Procédé selon la revendication 12, dans lequel le solvant est sélectionné de sorte que le premier polymère présente une solubilité d'environ 10 % en poids ou plus, de préférence une solubilité d'environ 50% en poids ou plus, plus de préférence une solubilité d'environ 98 % ou plus ; ou

dans lequel le solvant est sélectionné de sorte que le premier polymère peut gonfler dans le solvant et plus particulièrement, à une température de 23 °C, absorbe en gonflant environ 50 g de solvant ou plus par 100 g de polymère.

14. Procédé selon la revendication 12 ou 13, dans lequel le solvant est sélectionné parmi des solvants volatils et présente de préférence un point d'ébullition ou un point de décomposition d'environ 210 °C ou moins, plus particulièrement de préférence un point d'ébullition ou un point de décomposition d'environ 120 °C ou moins.

15. Procédé selon l'une des revendications 12 à 14, dans lequel le polymère matriciel est sélectionné parmi : polyamide, polyester, polyéther, polycétone, polyoléfine et polyvinyle ;

dans lequel le solvant comprend un liquide organique, de préférence un hydrocarbure aromatique, plus particulièrement du crésol, du xylol ou du toluol et/ou des hydrocarbures carboxylés, de préférence l'acide méthanoïque ou l'acide éthanoïque ou un acide minéral, plus particulièrement l'acide sulfurique, l'acide phosphorique ou les mélanges de ceux-ci et/ou des solutions aqueuses de ceux-ci ; et

dans lequel l'additif réduisant la résistance électrique existe de manière répartie de manière globalement uniforme dans le polymère matriciel et est sélectionné de préférence parmi le noir de carbone et les fibres de carbone.

16. Procédé selon l'une des revendications 12 à 15, dans lequel, sur une zone de surface du substrat, après l'application du revêtement, une peinture est effectuée de manière électrostatique à l'aide d'une poudre de peinture, dans lequel la poudre de peinture est cuite à une température d'environ 170 °C ou plus,

dans lequel, de préférence, une adhérence de la peinture sur la zone superficielle du substrat est obtenue, qui génère de préférence, selon un essai de quadrillage selon DIN EN ISO 2409, une valeur caractéristique de quadrillage de 0, 1 ou 2, plus particulièrement de préférence une valeur caractéristique de quadrillage de 0 ou 1 et plus particulièrement un recouvrement homogène de la peinture est obtenu ;

dans lequel, en option, la couche de peinture sur le revêtement dans la zone peinte présente un taux de recouvrement de peinture d'environ 90 % ou plus, plus particulièrement d'environ 98 % ou plus et dans lequel la couche de peinture est appliquée de préférence sous la forme d'une couche de peinture en poudre.

FIG.1

A

B

C

D

FIG.2

## FIG.3

FIG.4

A

ABC123○●®

B

C

D

FIG.5　　　　　　　　A

B

## FIG.6

A

500μm

B

# FIG.7

A

500µm

B

# FIG.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160121361 A1
- WO 2005097902 A1
- WO 9734709 A1
- EP 0638368 A1
- EP 0667625 B1
- EP 0685527 B1
- EP 1223188 B1
- EP 2071585 A1
- EP 2427518 B1
- WO 0148346 A1

**In der Beschreibung aufgeführte Nicht-Patentliteratur**

- **EHRENSTEIN** ; **TRAWIEL** ; **RIEDEL**. Praxis der Thermischen Analyse von Kunststoffen. Carl Hanser Verlag, 1998